(19) Europäisches Patentamt / European Patent Office / Office européen des brevets

(11) EP 3 321 096 B1

(12) EUROPEAN PATENT SPECIFICATION

(45) Date of publication and mention of the grant of the patent: **02.09.2020 Bulletin 2020/36**

(51) Int Cl.: ***B43L 1/00*** *(2006.01)*

(21) Application number: **17202847.4**

(22) Date of filing: **21.06.2011**

(54) **ARTICLES WITH REWRITABLE WRITING SURFACES AND METHODS FOR MAKING AND USING SAME**

GEGENSTÄNDE MIT WIEDERBESCHREIBBAREN SCHREIBOBERFLÄCHEN UND VERFAHREN ZUR HERSTELLUNG UND VERWENDUNG DAVON

ARTICLES PRÉSENTANT DES SURFACES D'ÉCRITURE RÉINSCRIPTIBLES ET LEURS PROCÉDÉS DE FABRICATION ET D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2010 US 357372 P**
**24.11.2010 US 416938 P**

(43) Date of publication of application: **16.05.2018 Bulletin 2018/20**

(62) Document number(s) of the earlier application(s) in accordance with Art. 76 EPC: **11729828.1 / 2 585 313**

(73) Proprietor: **3M Innovative Properties Co.**
**St. Paul, MN 55133-3427 (US)**

(72) Inventors:
- **GUSTAFSON, Frederick J.**
  **Saint Paul, Minnesota 55133-3427 (US)**
- **JING, Naiyong**
  **Saint Paul, Minnesota 55133-3427 (US)**
- **RIDDLE, Justin A.**
  **Saint Paul, Minnesota 55133-3427 (US)**
- **BASTIAENS, Willem V.**
  **Saint Paul, Minnesota 55133-3427 (US)**

(74) Representative: **Vossius & Partner**
**Patentanwälte Rechtsanwälte mbB**
**Siebertstrasse 3**
**81675 München (DE)**

(56) References cited:
**DE-A1-102005 051 587**
**US-A1- 2009 148 603**
**US-A1- 2009 202 816**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 321 096 B1

## Description

### Field of Invention

The present invention relates to hydrophilic coating compositions and a method of using articles as rewritable writing surfaces, e.g., dry erase boards, labels, file folders, filing tabs, notebook dividers, etc.

### Background

DE 10 2005 051 587 A1 describes particles having a zwitterionic structural moiety. US 2009/0202816 A1 describes nanoparticles comprising a silica surface having covalently bound zwitterionic functional groups. US 2009/0148603 A1 deals with water-based coatings for writable-erasable surfaces.

Articles having rewritable surfaces have been made from a variety of materials offering various combinations of properties. Commonly recognized embodiments include certain label materials, dry erase articles, note papers, file folders with rewritable tabs, etc.

A continuing need is for rewritable writing surfaces that exhibit robust durable performance; receptivity to writing with a variety of writing instruments under a variety of conditions; and good erasability.

Dry erase articles are an example. A standing challenge for dry erase articles is to find surfaces that can be easily cleaned, resist staining when written on with permanent markers, can be easily erased when written on with conventional dry erase markers, are durable, and so forth. Glass and porcelain surfaces have been long used in the writing surfaces of dry erase articles but improved performance is desired. For instance, though their non-porous surfaces are easily written on with dry erase markers and then easily erased after a short time such as about one day or less, the writing builds adhesion to the board over time becoming difficult or even impossible to remove by wiping with a dry eraser. Dry erase writing that is not removable by a dry eraser is commonly called ghosting. In addition, permanent markers tend to adhere well and cannot be easily removed. Such writing is often removable only with solvents such as isopropanol. Due to concerns for the environment and safety of users, solvent based cleaners are being replaced in the marketplace with cleaners containing water, surfactant, and a few percent of a less volatile organic solvent. Such cleaners are not always capable of removing permanent marker writing from dry erase boards. Other common dry erase surfaces with the same cleaning problems include coated film, melamine, and painted plastic and steel.

In addition, improved rewritability performance of other articles with writing surfaces is desired. For example, filing folders commonly have tabs which are written on by the user to identify contents of the folder, as do hanging file tabs, names, tags, notebook covers, drawers, bins, and the like. A persistent challenge with such articles which has not yet been satisfactorily met is that the writing surfaces do not provide desired performance, i.e., they do not accept writing from a desirable variety fo writing instruments, do not erase desirably cleanly and easily, and typically tend to degrade when erased, and so forth. A continuing need exists to provide such articles with rewritable surfaces thereon that exhibit improved rewritability.

### Summary

The present invention provides hydrophilic coating compositions and a method of using articles as rewritable writing surfaces, as defined in the claims. The writing surfaces of articles of the invention exhibit robust durable performance; receptivity to writing with a variety of writing instruments under a variety of conditions; and good erasability.

In brief summary, the articles used in the invention have a rewritable writing surface, e.g., the face of a label, a writing surface on a dry erase board, etc., having a coating as described herein on the face thereof. The coating comprises a hydrophilic zwitterionic silane as defined in the claims.

Such coatings have been surprisingly found to provide writing surfaces that exhibit surprisingly good rewritability properties.

Rewritable articles used in the invention have a writing surface coated with a hydrophilic coating. Preferably, such coating includes at least a monolayer of a hydrophilic silane as defined in the claims.

Also described is a method of treating a writing surface. The method includes applying a hydrophilic coating composition to the surface to bond to the -OH groups on the surface, wherein the hydrophilic coating composition includes alkoxysilane groups and/or silanol-functional groups bonded to a zwitterion, anion, cation, carbohydrate, or a hydrophilic polymeric moiety. The method further includes drying the hydrophilic coating composition to form a hydrophilic coating including at least a monolayer of the hydrophilic compound bonded to the writing surface through siloxane bonds.

Also described is a method of treating a writing surface to impart rewritable properties of the invention thereto. The method includes applying a hydrophilic coating composition to the surface to bond to the -OH groups on the surface, wherein the hydrophilic coating composition includes alkoxysilane groups and/or silanol-functional groups bonded to a zwitterion, anion, cation, carbohydrate, or a hydrophilic polymeric moiety. The hydrophilic coating composition also

contains lithium silicate, sodium silicate, potassium silicate, or combinations thereof. The method further includes drying the hydrophilic coating composition to form a hydrophilic coating including at least a monolayer of the hydrophilic compound bonded to the writing surface through siloxane bonds.

Further disclosed is a method which includes: applying a primer coating composition to the surface to form a primed surface having -OH groups thereon; contacting the primed surface having -OH groups thereon with a hydrophilic coating composition, wherein the hydrophilic coating composition includes alkoxysilane groups and/or silanol-functional groups bonded to a zwitterion, an anion, a cation, a carbohydrate, or a hydrophilic polymeric moiety. In certain embodiments, the hydrophilic coating composition also contains lithium silicate, sodium silicate, potassium silicate, silica, tetraalkoxysilane, oligomers thereof, or combinations thereof. The method further includes drying the hydrophilic coating composition to form a hydrophilic coating including at least a monolayer of the hydrophilic compound bonded to the primer coating through siloxane bonds.

Further disclosed is a method which comprises: applying a primer coating composition to the surface to form a primed surface comprising nanoparticles; contacting the primed surface with a hydrophilic-functional coating composition. In certain embodiments, the hydrophilic coating composition also contains lithium silicate, sodium silicate, potassium silicate, silica, tetraalkoxysilane, oligomers thereof, or combinations thereof. The method further includes drying the hydrophilic-functional coating composition to form a hydrophilic-functional coating including at least a monolayer of the hydrophilic-functional compound bonded to the primer coating through siloxane bonds.

In certain aspects, applying a primer coating composition to a writing surface involves contacting the substrate surface with a nanoparticle-containing coating composition. The nanoparticle-containing coating composition includes an aqueous dispersion having a pH of less than 5 including silica nanoparticles having average particle diameters of 40 nanometers or less, and an acid having a pKa of $\leq$ 3.5. The method further includes drying the nanoparticle-containing coating composition to provide a silica nanoparticle primer coating on the substrate surface. In certain embodiments, if desired, the nanoparticle-containing coating composition further includes a tetraalkoxysilane.

Also described is a method of treating a writing surface with energy such as actinic radiation, corona, flashlamp, or flame treatment in order to produce -OH groups on the surface. In certain embodiments, the surface is further treated with an primer coating composition containing nanoparticles. The method further includes applying a hydrophilic coating composition to the surface to bond to the -OH groups on the surface, wherein the hydrophilic coating composition includes alkoxysilane groups and/or silanol-functional groups bonded to a zwitterion, anion, cation, carbohydrate, or a hydrophilic polymeric moiety. In certain embodiments, if desired, the hydrophilic coating composition includes lithium silicate, sodium silicate, potassium silicate, silica, tetraalkoxysilane, oligomers thereof, or combinations thereof. The method further includes drying the nanoparticle-containing coating composition to provide a silica nanoparticle primer coating on the substrate surface.

Also described is a method of treating a substrate that includes a porcelain, glass, painted metal or organic polymeric surface to improve dry erase and permanent marker removal. The method includes: contacting the surface with a hydrophilic-functional coating composition, wherein the hydrophilic-functional coating composition includes a compound having hydrophilic-functional groups and alkoxysilane groups and/or silanol-functional and drying the hydrophilic-functional coating composition to form a hydrophilic-functional coating.

The hydrophilic-functional coating includes at least a monolayer of the hydrophilic-functional compound bonded to the substrate surface through siloxane bonds. The hydrophilic-functional compound comprises a zwitterion, with alkoxysilane groups and/or silanol-functional groups.

Optionally, if desired, the hydrophilic-functional coating can include lithium silicate, sodium silicate, potassium silicate, silica, tetraalkoxysilane, oligomers thereof, or combinations thereof.

The hydrophilic-functional coating includes at least a monolayer of the hydrophilic-functional compound bonded to the substrate surface through siloxane bonds.

In particular, in one embodiment, the coated article used in the claimed method includes a substrate surface, a sulfonate-functional zwitterionic coating mixed with lithium silicate, sodium silicate, potassium silicate, silica, tetraalkoxysilane, oligomers thereof, or combinations thereof bonded to the primer coating through siloxane bonds.

In another embodiment, the coated article used in the claimed method includes a substrate surface, a nanoparticle-containing primer disposed on the substrate surface, and a sulfonate-functional zwitterionic coating bonded to the nanoparticle-containing primer through siloxane bonds. The nanoparticle-containing primer includes agglomerates of silica nanoparticles having average particle diameters of 40 nanometers or less, said agglomerates including a three-dimensional porous network of silica nanoparticles, and the silica nanoparticles are bonded to adjacent silica nanoparticles.

In certain embodiments, the substrate surface includes a porcelain surface, a glass surface, a metal surface, a painted metal surface, a melamine surface, and an organic polymeric surface, or a combination thereof.

In certain embodiments, the hydrophilic-functional coating includes at least a monolayer of a hydrophilic-functional compound bonded to the nanoparticle-containing primer through siloxane bonds.

In certain embodiments, the nanoparticle-containing primer coating is 10 nm to 1,000 nm thick. In certain

embodiments of the coated article, the hydrophilic-functional coating is no greater than 10 microns thick, and often less than 1 micron thick. The coating can be less than 200 nm thick.

The present invention also provides methods of removing permanent marker writing from a surface.

In one embodiment of removing permanent marker writing from a surface, the method includes: receiving a coated article including a dry erase writing surface and a sulfonate-functional zwitterionic coating containing lithium silicate bonded to the surface through siloxane bonds; and removing permanent marker writing and ghosting from dry erase markers from the hydrophilic-functional surface by wiping with water.

In one embodiment of removing permanent marker writing from a surface, the method includes: receiving a coated article including a dry erase surface that includes a primer (preferably a nanoparticle-containing primer) disposed on the surface, and a sulfonate-functional zwitterionic coating containing lithium silicate bonded to the nanoparticle-containing primer through siloxane bonds; and removing permanent marker writing and ghosting from dry erase markers from the hydrophilic-functional surface by wiping with water.

In some embodiments, the methods of removing permanent marker writing and ghosting of dry erase markers from the hydrophilic-functional surface include applying water and/or water vapor to the permanent marker writing and wiping. In some embodiments, the permanent marker and ghosting of dry erase markers is removed by applying a water based glass cleaner such as WINDEX™ cleaner (SC Johnson Co., Racine, WI) and wiping.

In another embodiment, the present invention provides a coating composition that includes: a zwitterionic compound including hydrophilic-functional groups and alkoxysilane groups and/or silanol-functional groups as defined in the claims; alcohol and/or water; and a tetraalkoxysilane, oligomers thereof, lithium silicate, sodium silicate, potassium silicate, or combinations thereof.

Rewritable surfaces may be made for use as dry erase boards, adhesive-backed labels, folders, container covers, etc. Advantageously, the coatings described herein exhibit good writability with selected writing instruments (e.g., conventional dry erase markers and permanent markers, etc.) as well as easy cleaning of things such as permanent markers and ghosting from dry erase markers. The coatings do not interfere with the dry erase properties of the surface, and in some embodiments, actually make dry erase markers easier to remove from the surface.

In one embodiment, dry erase marker writing is removed from the rewritable coated article as well or better than the uncoated original surface.

In another embodiment, the hydrophilic coating is applied to a polymeric film that has poor dry erase properties. After application of a primer and the hydrophilic coating, the film has improved dry erase properties.

In another embodiment, the present invention uses a rewritable coated article that is durable because of the covalent bond of the hydrophilic coating to the surface or the primed surface. The covalently bonded coating is resistant to removal by water, water based glass cleaners, wet paper towels, dry paper towels, and dry erase markers.

In one embodiment, the hydrophilic coating comprises a water soluble polymer with hydroxyl groups. The coating composition is acidified to pH $\leq$ 3.5 and then coated on a polymeric film. The coated film is dried at a temperature sufficient to crosslink the polymer through a condensation reaction making it water insoluble. Permanent marker writing applied to the article can be removed water or with a commercially available glass cleaner. This coated article is useful as a rewritable label.

Also described is a coated article that includes a polymeric film surface, a nanoparticle-containing primer disposed on the substrate surface, and an acidified hydrophilic water soluble polymer with hydroxyl groups coated on top of the nanoparticle-containing primer. The nanoparticle-containing primer includes agglomerates of silica nanoparticles having average particle diameters of 40 nanometers or less, said agglomerates including a three-dimensional porous network of silica nanoparticles, and the silica nanoparticles are bonded to adjacent silica nanoparticles. Drying of the acidified hydrophilic water soluble polymer at a sufficient time and temperature crosslinks the polymer to make it water insoluble. In addition, the polymer can react with the silica nanoparticles through a condensation reaction.

In some aspects, the water soluble polymer with hydroxyl groups is polyvinyl alcohol. Suitable PVAs having weight average molecular weights up to about 120,000 are commercially available. In other embodiments the water soluble polymer is hydroxy methyl or hydroxyl ethyl cellulose.

## Definitions

The terms "comprises" and variations thereof do not have a limiting meaning where these terms appear in the description and claims.

The words "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, "a," "an," "the," "at least one," and "one or more" are used interchangeably.

As used herein, the term "or" is generally employed in its sense including "and/or" unless the content clearly

dictates otherwise. The term "and/or" means one or all of the listed elements or a combination of any two or more of the listed elements.

As used herein, all numbers are assumed to be modified by the term "about" and preferably by the term "exactly." Notwithstanding that the numerical ranges and parameters setting forth the broad scope of the invention are approximations, the numerical values set forth in the specific examples are reported as precisely as possible. All numerical values, however, inherently contain certain errors necessarily resulting from the standard deviation found in their respective testing measurements.

Also herein, the recitations of numerical ranges by endpoints include all numbers subsumed within that range (e.g., 1 to 5 includes 1, 1.5, 2, 2.75, 3, 3.80, 4, 5, etc.).

The term "in the range" or "within a range" (and similar statements) includes the endpoints of the stated range.

Groupings of alternative elements or embodiments disclosed herein are not to be construed as limitations. Each group member may be referred to and claimed individually or in any combination with other members of the group or other elements found therein. It is anticipated that one or more members of a group may be included in, or deleted from, a group for reasons of convenience and/or patentability. When any such inclusion or deletion occurs, the specification is herein deemed to contain the group as modified thus fulfilling the written description of all Markush groups used in the appended claims.

When a group is present more than once in a formula described herein, each group is "independently" selected, whether specifically stated or not. For example, when more than one Y group is present in a formula, each Y group is independently selected. Furthermore, subgroups contained within these groups are also independently selected. For example, when each Y group contains an R, then each R is also independently selected.

As used herein, the following terms have the indicated meanings: "organic group" means a hydrocarbon group (with optional elements other than carbon and hydrogen, such as oxygen, nitrogen, sulfur, and silicon) that is classified as an aliphatic group, cyclic group, or combination of aliphatic and cyclic groups (e.g., alkaryl and aralkyl groups), in the context of the present invention, the organic groups are those that do not interfere with the formation of a wipe-away dry erase and permanent marker surface; "aliphatic group" means a saturated or unsaturated linear or branched hydrocarbon group, this term is used to encompass alkyl, alkenyl, and alkynyl groups, for example; "alkyl group" means a saturated linear or branched hydrocarbon group including, for example, methyl, ethyl, isopropyl, t-butyl, heptyl, dodecyl, octadecyl, amyl, 2-ethylhexyl, and the like; "alkylene group" is a divalent alkyl group; "alkenyl group" means an unsaturated, linear or branched hydrocarbon group with one or more carbon-carbon double bonds, such as a vinyl group; "alkynyl group" means an unsaturated, linear or branched hydrocarbon group with one or more carbon-carbon triple bonds; "cyclic group" means a closed ring hydrocarbon group that is classified as an alicyclic group, aromatic group, or heterocyclic group; "alicyclic group" means a cyclic hydrocarbon group having properties resembling those of aliphatic groups; "aromatic group" or "aryl group" means a mono- or polynuclear aromatic hydrocarbon group; and "heterocyclic group" means a closed ring hydrocarbon in which one or more of the atoms in the ring is an element other than carbon (e.g., nitrogen, oxygen, sulfur, etc.). A group that may be the same or different is referred to as being "independently" something.

Substitution is anticipated on the organic groups of the complexes of the present invention. As a means of simplifying the discussion and recitation of certain terminology used throughout this application, the terms "group" and "moiety" are used to differentiate between chemical species that allow for substitution or that may be substituted and those that do not allow or may not be so substituted. Thus, when the term "group" is used to describe a chemical substituent, the described chemical material includes the unsubstituted group and that group with O, N, Si, or S atoms, for example, in the chain (as in an alkoxy group) as well as carbonyl groups or other conventional substitution. Where the term "moiety" is used to describe a chemical compound or substituent, only an unsubstituted chemical material is intended to be included. For example, the phrase "alkyl group" is intended to include not only pure open chain saturated hydrocarbon alkyl substituents, such as methyl, ethyl, propyl,
t-butyl, and the like, but also alkyl substituents bearing further substituents known in the art, such as hydroxy, alkoxy, alkylsulfonyl, halogen atoms, cyano, nitro, amino, carboxyl, etc. Thus, "alkyl group" includes ether groups, haloalkyls, nitroalkyls, carboxyalkyls, hydroxyalkyls, sulfoalkyls, etc. On the other hand, the phrase "alkyl moiety" is limited to the inclusion of only pure open chain saturated hydrocarbon alkyl substituents, such as methyl, ethyl, propyl, t-butyl, and the like.

The term "primary particle size" refers to the average size of unagglomerated single particles of silica.

As used herein, "hydrophilic" is used to refer to a surface that is wet by aqueous solutions, and does not express whether or not the layer absorbs aqueous solutions. Surfaces on which drops of water or aqueous solutions exhibit a static water contact angle of less than 50° are referred to as "hydrophilic". Hydrophobic substrates have a water contact angle of 50° or greater.

As used herein, "at least a monolayer of a hydrophilic-functional compound" includes, e.g., (1) a monolayer or a thicker layer of molecules, covalently bonded (through siloxane bonds) to the surface or primer on the surface of a substrate, wherein such molecules are derived from the hydrophilic-functional compound and (2) a monolayer or a thicker

layer of a water soluble polymer covalently bonded to the surface or primer on the surface of a substrate. If the hydrophilic-functional compound includes dimers, trimers, or other oligomers of individual molecules, then "at least a monolayer" would include a monolayer of such dimers, trimers, or other oligomers, or a mixture of such oligomers with monomers.

As used herein, the term "dry erase board" includes known dry erase surfaces such as glass, porcelain steel, painted steel, painted metal, painted hardboard, melamine, coated film, coated paper, coated fiberboard sheets, and other dry erase surfaces known in current commerce.

The above summary of the present invention is not intended to describe each disclosed embodiment or every implementation of the present invention. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

## Detailed Description of Illustrative Embodiments

The present invention is directed to hydrophilic coating compositions and the use of articles with rewritable writing surfaces. As will be understood, articles used in the invention can be made by a variety of configurations depending upon the desired application. Illustrative examples include dry erase articles, file folders (e.g., having tabs with writing surfaces of the invention thereon), labels, name tags, notebook (e.g., on which the covers have a rewritable writing surface of the invention), tabs for hanging files, content labels on bins, informational legends on equipment, doors, storage units, etc.

The invention has particular utility in such articles as dry erase boards. It has been discovered that application of a hydrophilic coating as described herein to glass and porcelain substrates surprisingly improves their performance as writing surfaces for dry erase articles. The writing surfaces of dry erase articles used in the invention exhibit excellent writability with conventional dry erase markers yet writing from permanent markers and ghosting from dry erase markers can be readily removed therefrom with water and a cloth or paper towel. No solvents or tools need be used. As a result, dry erase articles of the invention provide heretofore unattained utility and durability. In addition, the hydrophilic coating applied to a film provides a rewritable surface which could be used as a board or label. The surface accepts permanent marker writing which can subsequently be removed with water or a commercially available glass cleaner. In brief summary, illustrative examples of rewritable articles used in the invention comprise a writing surface comprising glass, porcelain, painted steel, melamine or film and having a coating as described herein. In addition, dry erase articles of the invention can further comprise such other optional components as frames, means for storing materials and tools such as writing instruments, erasers, cloths, note paper, etc., handles for carrying, protective covers, means for hanging on vertical surfaces, easels, etc.

Illustrative examples also include a label surface comprising a flexible substrate such as a film, paper, coated paper, or paper film laminate having a coating as described herein. Label articles used in the invention can further comprise an adhesive coating on the back of the substrate, a release liner, and a die cut pattern in the assembly allowing for the use of individual labels of the desired size.

Significantly, permanent marker writing and ghosting of dry erase markers can be easily removed from the hydrophilic-functional coating of the present invention with wiping after first applying water or a water based glass cleaner. A water based glass cleaner may contain a surfactant or a mixture of surfactants. The surfactants may be cationic, anionic or/and nonionic one or a mixture that are known in the art. Typically, methods of the present invention include removing permanent marker writing and ghosting from dry erase markers from the hydrophilic-functional surface by simply applying water (e.g., tap water at room temperature) and/or a water based glass cleaner and wiping. Herein, "wiping" refers to gentle wiping, typically by hand, with for example, a tissue, paper towel, or a cloth, without significant pressure (e.g., generally, no more than 800 grams) for one or more strokes or rubs (typically, only a few are needed).

In particular, in one aspect, there is described a coated article that includes a substrate surface, a primer (preferably, a nanoparticle-containing primer) disposed on the substrate surface, and a hydrophilic-functional coating disposed on the primed surface.

The hydrophilic-functional coating is preferably applied in a monolayer thickness, but can be as thick as 10 microns. The preferred thickness for the hydrophilic functional coating is from 200 to 1000 nm. The primer coating is preferably within a range of 10 nm to 1,000 nm thick, and frequently 50 nm to 250 nm thick.

Siloxane (Si-O-Si) bonds are used to chemically bind the hydrophilic functionality to the surface, whether it be directly to the substrate surface or to a primer coating thereon. Preferably, the presence of three siloxane bonds for each surface hydrophilic group makes the chemical bond relatively more stable than if one or two siloxane bonds were formed.

In one particular aspect, a coated article includes a substrate surface, a nanoparticle-containing primer disposed on the substrate surface, and a hydrophilic-functional coating bonded to the nanoparticle-containing primer through siloxane bonds. The nanoparticle-containing primer includes agglomerates of silica nanoparticles having average particle diameters of 40 nanometers or less, said agglomerates including a three-dimensional porous network of silica nanoparticles, and the silica nanoparticles are bonded to adjacent silica nanoparticles. The silica nanoparticles in the primer can be monodisperse particles of substantially uniform size or they can be mixtures of different sized nanoparticles.

In one aspect, there is described a method of treating a substrate surface. The method includes: applying a primer coating composition to the writing surface to form a primed surface having -OH groups thereon; contacting the primed surface having -OH groups thereon with a hydrophilic-functional coating composition, wherein the hydrophilic-functional coating composition includes an organic compound having hydrophilic-functional groups and alkoxysilane groups and/or silanol-functional groups. The method further includes drying the hydrophilic-functional coating composition to form a hydrophilic-functional coating including at least a monolayer of the hydrophilic-functional compound bonded to the primer coating through siloxane bonds; wherein dry erase and permanent markers are removable from the dried hydrophilic-functional coating by wiping, or preferably by applying water and/or a water based glass cleaner with wiping. According to the invention, the hydrophilic-functional organic compound is a zwitterionic compound.

In certain embodiments the hydrophilic-functional coating composition includes a tetraalkoxysilane, lithium silicate, sodium silicate, potassium silicate, or combinations thereof.

The hydrophilic-functional coating compositions of the present invention can be used on a variety of substrate surfaces, including for example, glass surface, a porcelain surface, a metal surface, an organic polymeric surface, or a combination thereof. The method includes: contacting the glass, metal or organic polymeric surface with a hydrophilic-functional coating composition, wherein the hydrophilic-functional coating composition includes an organic compound having hydrophilic-functional groups and alkoxysilane groups and/or silanol-functional groups as defined in the claims; and drying the hydrophilic-functional coating composition to form a hydrophilic-functional coating. The hydrophilic-functional coating includes at least a monolayer of the hydrophilic-functional compound bonded to the substrate surface through siloxane bonds. The hydrophilic-functional organic compound is a zwitterionic compound .

Advantageously, permanent marker writing and ghosting from dry erase markers is removable from the dried hydrophilic-functional coating by applying water and/or a water based glass cleaner and wiping.

Thus, the methods described herein can be used to prepare a hydrophilic article on a surface of a wide variety of substrates, thereby providing "wipe-away writing surfaces." Such a surface is one having a hydrophilic-functional coating thereon that can be cleaned of conventional dry erase markings with a dry eraser and permanent markings by applying water or a commercially available glass cleaner to the surface followed by gentle wiping with a cloth, paper towel, tissue, or the like.

In certain aspects of the coated article, the hydrophilic-functional coating includes at least a monolayer of a hydrophilic-functional compound bonded to the substrate surface through siloxane bonds. In certain embodiments, the hydrophilic coating composition also contains a tetraalkoxysilane, lithium silicate, sodium silicate, potassium silicate, or combinations thereof. In certain aspects of the coated article, the hydrophilic-functional coating includes at least a monolayer of a hydrophilic-functional compound bonded to a primer through siloxane bonds. In certain aspects of the coated article, the hydrophilic-functional coating includes at least a monolayer of a hydrophilic-functional compound bonded to a nanoparticle-containing primer through siloxane bonds. Also described is a hydrophilic article prepared from a method of the invention.

<u>Hydrophilic-Functional Coating</u>

The hydrophilic-functional coating can be prepared from hydrophilic-functional compounds. These compounds have an alkoxysilane- and/or silanol-functional group for bonding to a substrate surface. They also include a hydrophilic group for rendering hydrophilicity to the substrate surface.

According to the present invention, the hydrophilic-containing compounds are zwitterionic . Also described are non-zwitterionic hydrophilic-containing compounds.

Examples include non-zwitterionic sulfonate-organosilanol compounds such as those disclosed in US Patent Nos. 4,152,165 (Langager et al.) and 4,338,377 (Beck et al.).

In certain embodiments, the non-zwitterionic sulfonate-organosilanol compounds used in the solutions and compositions of the present invention have the following Formula (I):

$$[(MO)(Q_n)Si(XCH_2SO_3^-)_{3-n}]Y_{2/nr}^{+r} \qquad (I)$$

wherein:

- each Q is independently selected from hydroxyl, alkyl groups containing from 1 to 4 carbon atoms and alkoxy groups containing from 1 to 4 carbon atoms;
- M is selected from hydrogen, alkali metals, and organic cations of strong organic bases having an average molecular weight of less than 150 and a pKa of greater than 11;
- X is an organic linking group;

Y is selected from hydrogen, alkaline earth metals (e.g., magnesium, calcium, etc.), organic cations of protonated weak bases having an average molecular weight of less than 200 and a pKa of less than 11 (e.g., 4-aminopyridine, 2-methoxyethylamine, benzylamine, 2,4-dimethylimidazole, 3-[2-ethoxy(2-ethoxyethoxy)] propylamine), alkali metals, and organic cations of strong organic bases having an average molecular weight of less than 150 and a pKa of greater than 11 (e.g., $^{+}N(CH_3)_4$, $^{+}N(CH_2CH_3)_4$), provided that M is hydrogen when Y is selected from hydrogen, alkaline earth metals and organic cations of said protonated weak bases;
r is equal to the valence of Y; and
n is 1 or 2.

Further, the non-zwitterionic compound of Formula (I) is an alkoxysilane compound (e.g., wherein Q is an alkoxy group containing from 1 to 4 carbon atoms).

The weight percentage of oxygen in these compounds of Formula (I) is at least 30%, and preferably at least 40%. Most preferably it is in the range of 45% to 55%. The weight percentage of silicon in these compounds is no greater than 15%. Each of these percentages is based on the weight of the compound in the water-free acid form.

The organic linking group X of Formula (I) is preferably selected from alkylene groups, cycloalkylene groups, alkyl-substituted cycloalkylene groups, hydroxy-substituted alkylene groups, hydroxy-substituted monooxa alkylene groups, divalent hydrocarbon groups having monooxa backbone substitution, divalent hydrocarbon groups having monothia backbone substitution, divalent hydrocarbon groups having monooxa-thia backbone substitution, divalent hydrocarbon groups having dioxo-thia backbone substitution, arylene groups, arylalkylene groups, alkylarylene groups and substituted alkylarylene groups. Most preferably X is selected from alkylene groups, hydroxy-substituted alkylene groups and hydroxy-substituted monooxa alkylene groups.

Suitable examples of non-zwitterionic compounds of Formula (I) are described in U.S. Patent Nos. 4,152,165 (Langager et al.) and 4,338,377 (Beck et al.), and include, for example, the following:

$(HO)_3Si\text{-}CH_2CH_2CH_2\text{-}O\text{-}CH_2\text{-}CH(OH)\text{-}CH_2SO_3^{-}H^{+}$;

$(HO)_3Si\text{-}CH_2CH(OH)\text{-}CH_2SO_3H^{+}$;

$(HO)_3Si\text{-}CH_2CH_2CH_2SO_3^{-}H^{+}$ ;

$(HO)_3Si\text{-}C_6H_4\text{-}CH_2CH_2SO_3^{-}H^{+}$ ;

$(HO)_2Si\text{-}[CH_2CH_2SO_3^{-}H^{+}]_2$;

$(HO)\text{-}Si(CH_3)_2\text{-}CH_2CH_2SO_3^{-}H^{+}$;

$(NaO)(HO)_2Si\text{-}CH_2CH_2CH_2\text{-}O\text{-}CH_2\text{-}CH(OH)\text{-}CH_2SO_3^{-}Na^{+}$;

and

$(HO)_3Si\text{-}CH_2CH_2SO_3^{-}K^{+}$.

Examples of zwitterionic sulfonate-functional compounds according to the present invention include those disclosed in U.S. Patent No. 5,936,703 (Miyazaki et al.) and International Publication Nos. WO 2007/146680 and WO 2009/119690.

In certain embodiments, the zwitterionic sulfonate-organosilanol compounds used in the solutions and compositions of the present invention have the following Formula (II) wherein:

$$(R^1O)_p\text{-}Si(R^2)_q\text{-}W\text{-}N^{+}(R^3)(R^4)\text{-}(CH_2)_m\text{-}SO_3^{-} \qquad (II)$$

wherein:

each $R^1$ is independently a hydrogen, methyl group, or ethyl group;
each $R^2$ is independently a methyl group or an ethyl group;
each $R^3$ and $R^4$ is independently a saturated or unsaturated, straight chain, branched, or cyclic organic group, which may be joined together, optionally with atoms of the group W, to form a ring;
W is an organic linking group;
p and m are integers of 1 to 3;

q is 0 or 1; and

$$p + q = 3.$$

The organic linking group W of Formula (II) is preferably selected from saturated or unsaturated, straight chain, branched, or cyclic organic groups. The linking group W is preferably an alkylene group, which may include carbonyl groups, urethane groups, urea groups, heteroatoms such as oxygen, nitrogen, and sulfur, and combinations thereof. Examples of suitable linking groups W include alkylene groups, cycloalkylene groups, alkyl-substituted cycloalkylene groups, hydroxy-substituted alkylene groups, hydroxy-substituted monooxa alkylene groups, divalent hydrocarbon groups having mono-oxa backbone substitution, divalent hydrocarbon groups having mono-thia backbone substitution, divalent hydrocarbon groups having monooxo-thia backbone substitution, divalent hydrocarbon groups having dioxo-thia backbone substitution, arylene groups, arylalkylene groups, alkylarylene groups and substituted alkylarylene groups.

Suitable examples of zwitterionic compounds of Formula (II) are described in US Patent No. 5,936,703 (Miyazaki et al.) and International Publication Nos. WO 2007/146680 and WO 2009/119690, and include the following zwitterionic functional groups ($-W-N^+(R^3)(R^4)-(CH_2)_m-SO_3^-$):

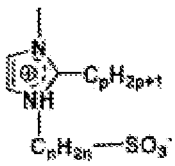

Sulfoalkyl imidazolium salts

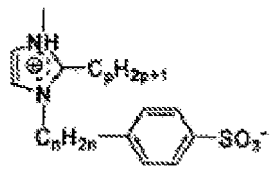

Sulfoaryl imidazolium salts

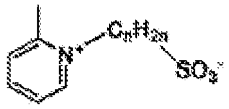

Sulfoalkyl pyridinium salts

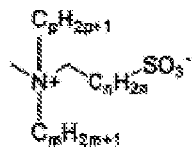

Sulfoalkyl ammonium salts (sulfobetaine)

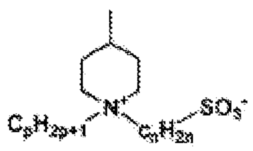

Sulfoalkyl piperidinium salts

In certain embodiments, the sulfonate-organosilanol compounds used in the solutions and compositions of the present invention have the following Formula (III) wherein:

$$(R^1O)_p-Si(R^2)_q-CH_2CH_2CH_2-N^+(CH_3)_2-(CH_2)_m-SO_3^- \qquad (III)$$

wherein:

each $R^1$ is independently a hydrogen, methyl group, or ethyl group;

each $R^2$ is independently a methyl group or an ethyl group;
p and m are integers of 1 to 3;
q is 0 or 1; and

$$p + q = 3.$$

Suitable examples of zwitterionic compounds of Formula (III) are described in US Patent No. 5,936,703 (Miyazaki et al.), including, for example:

$$(CH_3O)_3Si\text{-}CH_2CH_2CH_2\text{-}N^+(CH_3)_2\text{-}CH_2CH_2CH_2\text{-}SO_3^-;$$

and

$$(CH_3CH_2O)_2Si(CH_3)\text{-}CH_2CH_2CH_2\text{-}N^+(CH_3)_2\text{-}CH_2CH_2CH_2\text{-}SO_3^-.$$

Other examples of suitable zwitterionic compounds, which can be made using standard techniques that are exemplified in the Examples Section, include the following:

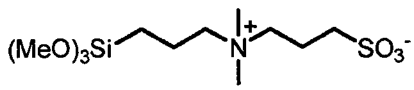

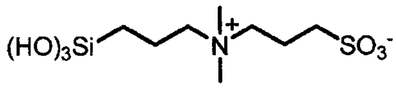

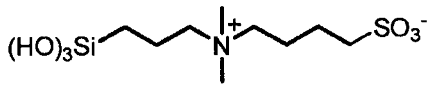

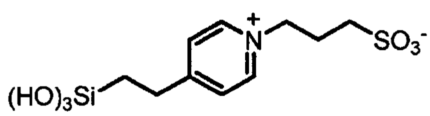

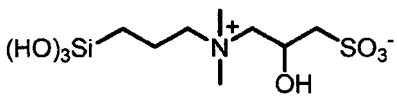

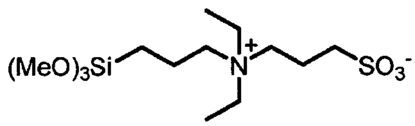

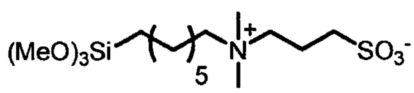

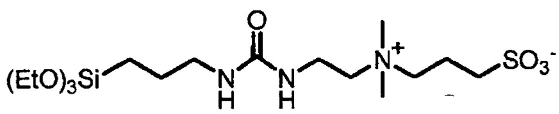

and

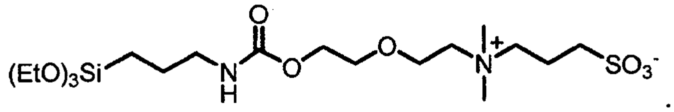

Other hydrophilic functional groups for silanes include but are not limited to phosphonate, carboxylate, gluconamide, sugar, polyvinyl alcohol, and quaternary ammonium.

The hydrophilic-functional coating composition typically includes a hydrophilic-functional compound in an amount of at least 0.1 wt%, and often at least 1 wt%, based on the total weight of the coating composition. The hydrophilic-functional coating composition typically includes a hydrophilic-functional compound in an amount of no greater than 20 wt%, and often no greater than 5 wt%, based on the total weight of the coating composition. Generally, for monolayer coating thicknesses, relatively dilute coating compositions are used. Alternatively, relatively concentrated coating compositions can be used and subsequently rinsed.

The hydrophilic-functional coating composition preferably includes alcohol, water, or hydroalcoholic solutions (i.e., alcohol and/or water). Typically, such alcohols are lower alcohols (e.g., $C_1$ to $C_8$ alcohols, and more typically $C_1$ to $C_4$ alcohols), such as methanol, ethanol, propanol, 2-propanol, etc. Preferably, the hydrophilic-functional coating compositions are aqueous solutions. As it is used herein, the term "aqueous solution" refers to solutions containing water. Such solutions may employ water as the only solvent or they may employ combinations of water and organic solvents such as alcohol and acetone. Organic solvents may also be included in the hydrophilic treatment compositions so as to improve their freeze-thaw stability. Typically, the solvents are present in an amount up to 50 wt% of the compositions and preferably in the range of 5 to 50 wt% of the compositions.

The hydrophilic-functional coating composition can be acidic, basic, or neutral. The performance durability of the coatings can be affected by pH. For example, the coating compositions containing the sulfonate-functional zwitterionic compounds are preferably neutral.

The hydrophilic-functional coating compositions may be provided in a variety of viscosities. Thus, for example, the viscosity may vary from a water-like thinness to a paste-like heaviness. They may also be provided in the form of gels. Additionally, a variety of other ingredients may be incorporated in the compositions.

Thus, for example, conventional surfactants, cationic, anionic, or nonionic surfactants can be used. Detergents and wetting agents can also be used. Typically, anionic surfactants, detergents, and wetting agents such as those described below for the Primer Composition are also useful in the hydrophilic-functional coating compositions of the invention.

In certain embodiments, the hydrophilic-functional coating composition further includes a tetraalkoxysilane (e.g., tetraethylorthosilicate ("TEOS")), oligomers thereof, such as alkyl polysilicates (e.g., poly(diethoxysiloxane)), lithium silicate, sodium silicate, potassium silicate, or combinations thereof, which can provide enhanced durability. The coupling agent(s), when present, are typically added to the composition at levels of 0.1 to 20 percent by weight of the coating composition, and more preferably 1 to 15 percent by weight of the coating composition. Optionally, strong acids such as nitric acid can be added to raise the pH to around 2.

Hydrophilic-functional coating compositions are preferably coated on the article using conventional techniques, such as bar, roll, curtain, rotogravure, spray, wipe or dip coating techniques. The preferred methods include spray, bar and roll coating.

Hydrophilic-functional coatings of the present invention can be coated on both sides of a substrate if desired. Alternatively, the coatings of the present invention may be coated on one side of the substrate. Once coated, the hydrophilic-functional article is typically dried at temperatures of 30°C to 200°C in a recirculating oven. An inert gas may be circulated. The temperature may be increased further to speed the drying process, but care must be exercised to avoid damage to the substrate. Drying drives a condensation reaction between the hydrophilic coating and -OH groups on the surface of the substrate.

## Hydrophilic Polymer Coating

In also described aspects, a hydrophilic polymer coating is applied to a polymeric substrate in order to make a rewritable label, folder, container, etc.

The hydrophilic polymer coating can be prepared from water soluble polymers with hydroxyl groups. In the presence of acid, the hydroxyl groups on these polymers can condense to form a water insoluble coating. The hydroxyl groups can also react with silanol groups on a silica nanoparticle primer.

Suitable hydrophilic polymers with hydroxy groups include but are not limited to polyvinyl alcohol, hydroxy methyl cellulose, hydroxyethyl cellulose, dextran, guar gum and mixtures thereof.

The hydrophilic polymer coating composition typically includes a hydrophilic polymer in an amount of at least 0.1 wt%, and often at least 1 wt%, based on the total weight of the coating composition. The hydrophilic-functional

coating composition typically includes a hydrophilic polymer compound in an amount of no greater than 20 wt%, and often no greater than 5 wt%, based on the total weight of the coating composition. Generally, for monolayer coating thicknesses, relatively dilute coating compositions are used. Alternatively, relatively concentrated coating compositions can be used and subsequently rinsed.

The hydrophilic polymer coating composition preferably includes alcohol, water, or hydroalcoholic solutions (i.e., alcohol and/or water). Typically, such alcohols are lower alcohols (e.g., $C_1$ to $C_8$ alcohols, and more typically $C_1$ to $C_4$ alcohols), such as methanol, ethanol, propanol, 2-propanol, etc. Preferably, the hydrophilic polymer coating compositions are aqueous solutions. As it is used herein, the term "aqueous solution" refers to solutions containing water. Such solutions may employ water as the only solvent or they may employ combinations of water and organic solvents such as alcohol and acetone. Organic solvents may also be included in the hydrophilic treatment compositions so as to improve their freeze-thaw stability. Typically, the solvents are present in an amount up to 50 wt% of the compositions and preferably in the range of 5 to 50 wt% of the compositions.

The hydrophilic polymer coating composition is acidified to a pH $\leq$ 3.5 in order to promote crosslinking and make the coating more durable. Useful acids include both organic and inorganic acids and may be exemplified by oxalic acid, citric acid, $H_2SO_3$, $H_3PO_4$, $CF_3CO_2H$, HCl, HBr, HI, $HBrO_3$, $HNO_3$, $HClO_4$, $H_2SO_4$, $CH_3SO_3H$, $CF_3SO_3H$, $CF_3CO_2H$, and $CH_3SO_2OH$. Most preferred acids include HCl, $HNO_3$, and $H_3PO_4$.

The hydrophilic polymer coating compositions may be provided in a variety of viscosities. Thus, for example, the viscosity may vary from a water-like thinness to a paste-like heaviness. They may also be provided in the form of gels. Additionally, a variety of other ingredients may be incorporated in the compositions. Thus, for example, conventional surfactants, cationic, anionic, or nonionic surfactants can be used. Detergents and wetting agents can also be used. Typically, anionic surfactants, detergents, and wetting agents such as those described below for the Primer Composition are also useful in the hydrophilic polymer coating compositions of the invention.

In certain aspects, the hydrophilic polymer coating composition further includes a tetraalkoxysilane (e.g., tetraethylorthosilicate ("TEOS")), oligomers thereof, such as alkyl polysilicates (e.g., poly(diethoxysiloxane)), lithium silicate, sodium silicate, potassium silicate, or combinations thereof, which can provide enhanced durability. The coupling agent(s), when present, are typically added to the composition at levels of 0.1 to 20 wt% of the coating composition, and more preferably 1 to 15 wt% of the coating composition. Optionally, strong acids such as nitric acid can be added to raise the pH to around 2.

Hydrophilic polymer coating compositions are preferably coated on the article using conventional techniques, such as bar, roll, curtain, rotogravure, spray, wipe or dip coating techniques. The preferred methods include spray, bar and roll coating.

Hydrophilic polymer coatings can be coated on both sides of a substrate if desired. Alternatively, the coatings of the present invention may be coated on one side of the substrate. Once coated, the hydrophilic polymer article is typically dried at temperatures of 30°C to 200°C in a recirculating oven. An inert gas may be circulated. The temperature may be increased further to speed the drying process, but care must be exercised to avoid damage to the substrate. Drying drives a condensation reaction between the hydrophilic coating and -OH groups on the surface of the substrate.

Primer Coating

In certain embodiments of the present invention, a primer coating is formed on a substrate surface. Such primer coating provides -OH groups on the substrate surface. Preferably, such primer coating is formed from a nanoparticle-containing coating composition that is coated and dried on a substrate surface.

Other primer compositions or processes can be used to provide -OH groups. Examples of such compositions include a tetraalkoxysilane, oligomers thereof, lithium silicate, sodium silicate, potassium silicate, or combinations thereof. In certain embodiments, the described surface in this invention can be surface modified by the conventional vapor coating or vapor deposition process to create SiO or $SiO_2$ thin layer primers described in US Patent No. 4,338,377 (Beck et al.). Surface modification of substrates may also include vapor coating or vapor deposition of alkoxysilanes. Although the following discussion focuses on nanoparticle-containing primer coatings, various features described (e.g., coating thickness) apply to other primer coatings.

In certain embodiments, the nanoparticle-containing primer coating composition includes an aqueous dispersion having a pH of less than 5 comprising silica nanoparticles having average particle diameters of 40 nanometers or less, and an acid having a pKa of $\leq$ 3.5 (preferably < 2.5, most preferably less than 1).

These acidified silica nanoparticle primer coating compositions, can be coated directly onto hydrophobic organic and inorganic substrates without either organic solvents or surfactants. The wetting property of these inorganic nanoparticle aqueous dispersions on hydrophobic surfaces such as polyethylene terephthalate ("PET") or polycarbonate ("PC") is a function of the pH of the dispersions and the pKa of the acid. The primer coating compositions are coatable on hydrophobic organic substrates when they are acidified with HCl to pH of 2 to 3, and even to 5 in some embodiments. In contrast, the primer coating compositions bead up on the organic substrates at neutral or basic pH.

The silica nanoparticles used in this primer composition are dispersions of submicron size silica nanoparticles in an aqueous or in a water/organic solvent mixture. Generally, the silica nanoparticles have an average primary particle diameter of 40 nanometers or less, preferably 20 nanometers or less, and more preferably 10 nanometers or less. The average particle size may be determined using transmission electron microscopy. The nanosilica described in this invention may be spherical or nonspherical. The silica nanoparticles are preferably not surface modified.

The smaller nanoparticles, those of 20 nanometers or less, generally provide better primer coatings, when acidified, without the need for additives such as tetraalkoxysilanes, surfactants or organic solvents. Further, the nanoparticles generally have a surface area greater than 150 $m^2$/gram, preferably greater than 200 $m^2$/gram, and more preferably greater than 400 $m^2$/gram. The particles preferably have narrow particle size distributions, that is, a polydispersity (i.e., particle size distribution) of 2.0 or less, preferably 1.5 or less. If desired, larger silica particles may be added, in amounts that do not deleteriously decrease the coatability of the composition on a selected substrate, and do not reduce the hydrophilicity.

Inorganic silica sols in aqueous media are well known in the art and available commercially. Silica sols in water or water-alcohol solutions are available commercially under such trade names as LUDOX (from E.I. duPont de Nemours and Co., Inc., Wilmington, DE), NYACOL (from Nyacol Co., Ashland, MA), or NALCO (from Ondea Nalco Chemical Co., Oak Brook, IL). One useful silica sol is NALCO™ 2326, silica sol with mean particle size of 5 nanometers, pH 10.5, and solid content 15% by weight. Other commercially available silica nanoparticles suitable for use in the present invention include NALCO™ 1115 and NALCO™ 1130 from NALCO Chemical Co., REMASOL™ SP30 from Remet Corp., and LUDOX SM from E.I. Du Pont de Nemours Co., Inc., and SNOWTEX™ ST-OUP, SNOWTEX™ ST-UP, SNOWTEX™ ST-PS-S from Nissan Chemical Co, and Li518 from Silco International Inc.

Non-aqueous silica sols (also called silica organosols) may also be used and are silica sol dispersions wherein the liquid phase is an organic solvent, or an aqueous organic solvent. In the practice of this invention, the silica sol is chosen so that its liquid phase is typically aqueous or an aqueous organic solvent. However, it has been observed that sodium stabilized silica nanoparticles should first be acidified prior to dilution with an organic solvent such as ethanol. Dilution prior to acidification may yield poor or nonuniform coatings. Ammonium stabilized silica nanoparticles may generally be diluted and acidified in any order.

The primer coating composition contains an acid or combination of acids, each having a pKa ($H_2O$) of $\leq$3.5, preferably <2.5, most preferably less than 1. Useful acids include both organic and inorganic acids and may be exemplified by oxalic acid, citric acid, $H_2SO_3$, $H_3PO_4$, $CF_3CO_2H$, HCl, HBr, HI, $HBrO_3$, $HNO_3$, $HClO_4$, $H_2SO_4$, $CH_3SO_3H$, $CF_3SO_3H$, $CF_3CO_2H$, and $CH_3SO_2OH$. Most preferred acids include HC1, $HNO_3$, and $H_3PO_4$. In some embodiments, it is desirable to provide a mixture of an organic and inorganic acid. In some embodiments one may use a mixture of acids comprising those having a pKa $\leq$3.5 (preferably <2.5, most preferably less than 1), optionally with minor amounts of other acids having pKa's >0. It has been found that weaker acids having a pKa of >4, such as acetic acid, do not provide a uniform coatings having the desirable properties of transmissivity, cleanability, and/or durability. In particular, primer coating compositions with weaker acids such as acetic acid typically bead up on the surface of a substrate.

The primer coating composition generally contains sufficient acid to provide a pH of less than 5, preferably less than 4, most preferably less than 3. In some embodiments, it has been found that the pH of the coating composition can be adjusted to pH from 5 to 6 after reducing the pH to less than 5. This allows one to coat pH-sensitive substrates.

Tetraalkoxy coupling agents, particularly tetraalkoxysilanes, such as tetraethylorthosilicate ("TEOS"), and oligomeric forms of tetraalkoxysilane, such as alkyl polysilicates (e.g., poly(diethoxysiloxane)), may also be useful to improve binding between silica nanoparticles. The optimal amount of coupling agent is determined experimentally and is dependent on the coupling agent's identity, molecular weight and refractive index. The coupling agent(s), when present, are typically added to the composition at levels of 0.1 to 50 percent by weight (wt-%) of the silica nanoparticle concentration, and more preferably 1 to 15 percent by weight of the silica nanoparticles.

The primed article includes a substrate surface bearing a continuous network of silica nanoparticles agglomerates. The particles preferably have an average primary particle size of 40 nanometers or less. The average particle size may be determined using transmission electron microscopy. As used herein, the term "continuous" refers to covering the surface of the substrate with virtually no discontinuities or gaps in the areas where the gelled network is applied. The term "network" refers to an aggregation or agglomeration of nanoparticles linked together to form a porous three dimensional network. The term "primary particle size" refers to the average size of unagglomerated single particles of silica.

The primer coating layer thicknesses may be higher, e.g., as high as a few microns thick, depending on the application. The mechanical properties may be expected to be improved when the coating thickness is increased.

In order to uniformly coat a primer composition onto a hydrophobic substrate from an aqueous system it may be desirable to increase the surface energy of the substrate and/or reduce the surface tension of the coating composition. The surface energy may be increased by oxidizing the substrate surface prior to coating using corona discharge, actinic radiation, or flame treatment methods. These methods may also improve adhesion of the coating to the substrate. Other methods capable of increasing the surface energy of the article include the use of organic polymeric primers such as

thin coatings of polyvinylidene chloride (PVDC). Alternatively, the surface tension of the coating composition may be decreased by addition of lower alcohols ($C_1$ to $C_8$). In some instances, however, in order to improve the coating hydrophilicity for desired properties and to ensure uniform coating of the article from an aqueous or hydroalcoholic solution, it may be beneficial to add a wetting agent, which is typically a surfactant, to the primer composition.

The term "surfactant" as used herein describes molecules comprising hydrophilic (polar) and hydrophobic (non-polar) regions on the same molecule which are capable of reducing the surface tension of the coating solution. Useful surfactants may include those disclosed in US Patent No. 6,040,053 (Scholz et al.).

For typical concentrations of silica nanoparticles (e.g., 0.2 to 15 percent by weight relative to the total coating composition) most surfactants comprise less than 0.1 percent by weight of the coating composition, preferably 0.003 to 0.05 percent by weight, in order to preserve the anti-reflective properties of the coating. It should be noted that with some surfactants a spotty coating is attained at concentrations in excess of what is needed to achieve the anti-fog property.

Anionic surfactants in the primer coating composition are preferred when added to improve the uniformity of the resulting coatings. Useful anionic surfactants include, but are not limited to, those with molecular structures comprising (1) at least one hydrophobic moiety, such as $C_6$ to $C_{20}$ alkyl, alkylaryl, and/or alkenyl groups, (2) at least one anionic group, such as sulfate, hydrophilic, phosphate, polyoxyethylene sulfate, polyoxyethylene hydrophilic, polyoxyethylene phosphate, and the like, and/or (3) the salts of such anionic groups, wherein said salts include alkali metal salts, ammonium salts, tertiary amino salts, and the like. Representative commercial examples of useful anionic surfactants include sodium lauryl sulfate, e.g., TEXAPON™ L-100 from Henkel Inc., Wilmington, DE, or POLYSTEP™ B-3 from Stepan Chemical Co, Northfield, IL; sodium lauryl ether sulfate, e.g., POLYSTEP™ B-12 from Stepan Chemical Co., Northfield, IL; ammonium lauryl sulfate, e.g., STANDAPOL™ A from Henkel Inc., Wilmington, DE; and sodium dodecyl benzene hydrophilic, e.g., SIPONATE™ DS-10 from Rhone-Poulenc, Inc., Cranberry, NJ.

Where the primer coating composition does not include a surfactant or when improved coating uniformity is desirable, it may be beneficial to add another wetting agent, including those that do not impart durable anti-fog properties, in order to ensure uniform coating of the article from an aqueous or hydroalcoholic solution. Examples of useful wetting agents include polyethoxylated alkyl alcohols (e.g., BRIJ™ 30 and BRIJ™ 35 from ICI Americas, Inc., and TERGITOL™ TMN-6™ Specialty Surfactant from Union Carbide Chemical and Plastics Co., polyethoxylated alkylphenols (e.g., TRITON™ X-100 from Union Carbide Chemical and Plastics Co., ICONOL™ NP-70 from BASF Corp.) and polyethylene glycol/polypropylene glycol block copolymer (e.g., TETRONIC™ 1502 Block Copolymer Surfactant, TETRONIC™ 908 Block Copolymer Surfactant, and PLURONIC™ F38 Block Copolymer Surfactant all from BASF, Corp.). Of course, any added wetting agent must be included at a level which will not destroy the anti-reflective or anti-fog properties of the coating, if such features are desired. Generally the wetting agent is used in amounts of less than 0.1 percent by weight of the coating composition, preferably 0.003 to 0.05 percent by weight of the coating composition depending on the amount of silica nanoparticles. Rinsing or steeping the coated article in water may be desirable to remove excess surfactant or wetting agent.

Primer coating compositions are preferably coated on the article using conventional techniques, such as bar, roll, curtain, rotogravure, spray, or dip coating techniques. In order to ensure uniform coating and wetting of the film, it may be desirable to oxidize the substrate surface prior to coating using corona discharge, plasma, actinic radiation or flame treatment methods. Other methods capable of increasing the surface energy of the article include the use of primers such as polyvinylidene chloride ("PVDC").

The primer coatings are preferably applied in uniform average thicknesses varying by less than 20 nm and more preferably by less than 10 nm in order to avoid visible interference color variations in the coating. The optimal average dry coating thickness is dependent upon the particular primer coating composition, but in general the average thickness of the coating is 10 nm to 1,000 nm, preferably 50 nm to 250 nm, more preferably 75 nm to 200 nm, and even more preferably 100 to 150 nm. The primer thickness can be measured with an ellipsometer such as a Gaertner Scientific Corp. Model No. L115C Ellipsometer.

Primer coatings can be coated on both sides of a substrate if desired. Alternatively, the coatings may be coated on one side of the substrate.

Once coated, the primed article is typically dried at temperatures of 20°C to 150°C in a recirculating oven. An inert gas may be circulated. The temperature may be increased further to speed the drying process, but care must be exercised to avoid damage to the substrate. For inorganic substrates, the cure temperature can be above 200°C. After the primer coating composition is applied to the substrate and dried, the coating comprises preferably from 60 to 95 percent by weight (more preferably from 70 to 92 percent by weight) of silica nanoparticles (typically agglomerated), from 0.1 to 20 percent by weight (more preferably from 10 to 25 percent by weight) tetraalkoxysilanes and optionally 0 to 5 percent by weight (more preferably from 0.5 to 2 percent by weight) surfactant, and optionally up to 5 percent by weight (preferably 0.1 to 2 percent by weight) wetting agent.

In some embodiments the primer coating composition itself provides a tough, abrasion resistant layer that protects the substrate and the underlying substrate from damage from causes such as scratches, abrasion and solvents.

In many embodiments, the primer coating compositions are shelf stable, e.g., they do not gel, opacify, or

otherwise deteriorate significantly. Further, in many embodiments, the primed articles are durable and abrasion resistant.

Surface treatment

In some embodiments, the rewritable article is treated with energizing radiation in order to produce -OH or similar functional groups on the surface. Such radiation includes corona, plasma, actinic radiation, flashlamp, and flame treatment. In some embodiments, the treatment with energizing radiation is done before priming in order to get the primer to bond to the rewritable article.

Coated Articles

In some embodiments, writing surfaces of dry erase articles used in the invention comprise a substrate containing hydroxyl groups such as porcelain, ceramic, and glass. In other embodiments, writing surfaces of dry erase articles comprise a substrate preferably having a primed surface, which may be of virtually any construction, transparent to opaque, polymeric, paper or metal, having a flat, curved, or complex shape, and preferably having formed thereon a continuous network of agglomerated silica nanoparticles.

In some embodiments, the writing surface of the dry erase articles include dry erase surfaces such as glass, porcelain steel, painted steel, painted metal, painted hardboard, melamine, coated film, coated paper, coated fiberboard sheets, and other dry erase surfaces known in current commerce. In other embodiments, the writing surface is a coated film or coated paper for use as a face stock for labels, as file folders, and so forth. In both embodiments, polymeric substrates may comprise polymeric sheet, film, or molded material.

Preferred primer, and hydrophilic-functional coating compositions of the present invention provide hydrophilicity to a substrate.

In other embodiments, where increased hydrophilicity is desired, the substrate may be initially hydrophobic. The compositions may be applied to a wide variety of substrates by a variety of coating methods. As used herein, "hydrophilic" is used to refer to a surface that it is wet by aqueous solutions, and does not express whether or not the layer absorbs aqueous solutions. Surfaces on which drops of water or aqueous solutions exhibit a static water contact angle of less than 50° are referred to as "hydrophilic." Hydrophobic substrates have a water contact angle of 50° or greater.

Substrates that can be used to make rewritable articles used in the invention may, if desired, be transparent or translucent to visible light. Substrates used herein may be flexible or inflexible as desired. Illustrative examples of suitable substrates include polyester (e.g., polyethylene terephthalate, polybutylenetcrephthalate), polycarbonate, allyldiglycolcarbonate, polyacrylates, such as polymethylmethacrylate, polystyrene, polysulfone, polyethersulfone, homo-epoxy polymers, epoxy addition polymers with polydiamines, polydithiols, polyethylene copolymers, fluorinated surfaces, cellulose esters such as acetate and butyrate, glass, ceramic, porcelain, coated paper, metal, organic and inorganic composite surfaces and the like, including blends and laminates thereof.

In other embodiments, the substrate need not be transparent. It has been found that the composition provides easily cleanable surfaces to substrates such as flexible films used label applications. Flexible films may be made from polyesters such as PET or polyolefins such as PP (polypropylene), PE (polyethylene) and PVC (polyvinyl chloride). The substrate can be formed into a film using conventional filmmaking techniques such as extrusion of the substrate resin into a film and optional uniaxial or biaxial orientation of the extruded film. The substrate can be treated to improve adhesion between the substrate and the primer coating, using, e.g., chemical treatment, corona treatment such as air or nitrogen corona, plasma, flame, or actinic radiation. If desired, an optional tie layer can also be applied between the substrate and the primer coating composition to increase the interlayer adhesion. The other side of the substrate may also be treated using the above-described treatments to improve adhesion between the substrate and an adhesive. The substrate may be provided with graphics, such as words or symbols as known in the art.

In still other embodiments, the substrate can be a metal or have a metal surface (e.g., vapor deposited metals) such as aluminum or stainless steel.

Examples

The invention will be further explained with the following illustrative, non-limiting examples. All amounts are by weight unless otherwise indicated.

Test Methods

The following test methods were used in the examples.

Permanent Marker Removal with Water and Glass Cleaner: Surfaces were marked with 6 permanent markers (3 brands, 2 colors of each brand), i.e., AVERY™ MARKS-A-LOT™, BIC™ permanent markers, and SHARPIE™ markers

as indicated. One color of each brand was black. The second color was blue for the BIC™ marker and red for the AVERY™ MARKS-A-LOT™ and SHARPIE™ markers. The name of the marker was written on each surface. After aging for 24 hours at room temperature, a stream of water was applied to the writing with a spray bottle with the sample in horizontal orientation on a lab bench. After 20 seconds, a clean paper towel was used to remove as much of the writing as possible by wiping several times. This procedure was repeated once for a total of two washings with water.

The surface was examined for removal of permanent marker writing. The percent of the permanent marker writing completely removed by water was estimated visually. If a light or ghost image of the entire marker line remained on the surface, it was recorded as 0% removed.

If any writing remained on the surface, i.e., less than 100% was removed by water wipe as described above, then WINDEX™ glass cleaner was sprayed on the writing. After 20 seconds, the wet surface was wiped with a paper towel. The WINDEX™ wash and wipe was done twice before the percent of marker writing removed was estimated visually.

Dry Erase Marker Writability: Several surfaces were marked with 14 different dry erase markers (7 brands of dry erase markers), i.e., AVERY™ MARKS-A-LOT™, BEIFA™ private label markers, BIC™ Dry Erase markers, DIXON™ Dry Erase Markers, EXPO™ Bold, EXPO™ Low Odor and QUARTET™ Markers as indicated. Two colors of marker from each brand were chosen, one black and the other red, green, or blue. A typical dry erase material sample was about the size of a sheet of paper. For each marker brand, a horizontal space about 2.5 cm high on the sample was reserved for that marker brand. The first marker was used to write the marker brand name on the left hand side of the 2.5 cm high space and the second marker was used to write the same marker brand name on the right hand side of the 2.5 cm high space. In this manner, all the writing from each marker brand is lined up in one erasable horizontal line.

After marking on the inventive dry erase surface, each ink line was examined for dewetting. Dewetting or beading up of the dry erase ink was evidenced by the appearance of gaps in the ink line or a shrinking of the ink line. The total number of markers that dewet was recorded. Fourteen individual markers were utilized in the writing test, the range of possible dewetting scores is 0 to 14. If no markers dewet, the dewetting score was zero. If 10 markers dewet, the score was 10.

Dry Erase Marker Writing Removal: The dry erase marker writing was erased after 24 hours of dwell time on the surface with an EXPO™ dry eraser. A 2.5 kg flat brass weight was put on top of the eraser. This weight was the same length and width as the eraser. The weighted eraser was placed just before the first line of marker writing. The eraser was pushed over the entire line of that marker without additional hand pressure on the eraser. If enough writing was removed so that the name of the marker was not readable, then the marker was considered to have been erased with one stroke. If not, the eraser was passed over the writing again. This was continued until the name of the marker is no longer readable. The total number of eraser strokes required to erase each of the seven lines of dry erase marker writing was recorded. The minimum dry erase score is seven strokes.

Abrasion Test: A mechanical device was constructed capable of passing a standard EXPO™ dry eraser over a surface multiple times at a rate of 93 passes per minute. The housing for the eraser had a weight of about 250 g. This housing also held a 5 lb weight so that the total weight on the eraser was about 2.5 kg. The number of eraser passes over the sample was controlled by a countdown timer attached to the power cord of the instrument. After a present time, the instrument shut off. The timer was programmed to stop after 1000 passes of the eraser.

## Materials

Markers, materials, and stock solutions utilized in the examples and comparative examples are identified in Tables 1, 2, and 3, respectively.

Table 1 Permanent and Dry Erase Markers

| Brand | Marker Type | Source |
|---|---|---|
| AVERY™ MARKS-A-LOT™ markers, chisel point | Permanent | Avery-Dennison Corp., Pasadena, CA |
| BIC™ markers, chisel point | Permanent | BIC Corporation, Milford, CN |
| SHARPIE™ markers, fine point | Permanent | Sanford Corp., Bellwood, IL |
| AVERY™ MARKS-A-LOT™ markers, chisel point | Dry erase | Avery-Dennison Corp. |
| BIC™ markers, chisel point | Dry erase | BIC Corporation |
| TICONDEROGA™ markers, chisel point | Dry erase | Dixon Ticonderoga Co., Heathrow, FL |
| BEIFA™ markers, chisel point | Dry erase | Beifa Corp, Tokyo, Japan |

(continued)

| Brand | Marker Type | Source |
|---|---|---|
| EXPO™ Bold markers, chisel point | Dry erase | Sanford Corp. |
| EXPO™ Low Odor markers | Dry erase | Sanford Corp. |
| QUARTET™ markers, chisel point | Dry erase | Acco, Inc., Lincolnshire, IL |

Table 2 Materials

| **Material** | **Description** | **Source** |
|---|---|---|
| SILCO™ Li518 | 5 nm lithium stabilized silica, 18 wt % in water | SILCO2 International Inc, Portland, OR |
| POLYSTEP™ B-430S | sodium lauryl ether sulfate, 4eo | Stepan Company, Northfield, IL. |
| LITHISIL™ | Lithium silicate, 23 wt% in water | PQ Corp, Valley Forge, PA |
| 3-(N,N-dimethylaminopropyl)trimethoxysilane | | Gelest, Morrisville, PA |
| 1,4-butane sultone | | Aldrich Chemical, St. Louis, MO. |
| LSS-75 | Lithium silicate, 22 wt% in water | Nissan Chemical America Corp, Huston, TX |
| 3-(trihydroxysilyl)propyl methyl-phosphonate, monosodium salt | 42 wt% in water | Aldrich Chemical |
| Carboxyethylsilanetriol, sodium salt | 25 wt% in water | Gelest |
| 3-(trihydroxysilyl)-1-propanesulfonic acid | 30 to 35 wt% in water | Gelest |
| N-(3-triethoxysilylpropyl)gluconamide | 50 wt% in ethanol | Gelest |
| N-trimethoxysilylpropyl-N,N,N-trimethylammonium chloride | 50 wt% in ethanol | Gelest |
| 2-[methoxy(polyethylenoxy)propyl]trimethoxysilane | WAMW 460 to 590 | Gelest |
| Nitric acid | | EMD Chemicals, Gibbstown, NJ |
| KIMWIPES™ paper tissues | Lint free tissues | Kimberly Clark, Roswell, GA |
| ALCONOX™ detergent | Powdered detergent | Alconox Inc., White Plains, NJ |
| Porcelain steel sheet | Porcelain coated steel | JFE Corp., Tokyo, Japan |
| Glass plate | Float glass | Cardinal Glass Co., Eden Prairie, MN |
| Clear polyester film, 2 mil thick, one side primed with PVDC | Polyethylene terephthalate film | 3M Company, St. Paul, MN |
| Painted steel panel | Dry erase painted steel | Data Zone, Shen Zhen, China |
| 2 mil white polyester film with a UV cured multifunctional acrylate coating | Dry erase film | Protect-all Corp., Darien, WI |
| WINDEX™ glass cleaner | Water based cleaner | SC Johnson Co., Racine, WI |
| EXPO™ dry eraser | Eraser with felt fibers | Sanford Corp., Bellwood, IL |

(continued)

| Material | Description | Source |
|---|---|---|
| 3M™ Whiteboard Eraser | Melamine fiber pad | 3M Company |
| POVAL™ R-1130 | Silane functional polyvinyl alcohol | Kuraray America Inc., Houston, TX |
| POVAL™ R-2105 | Silane functional polyvinyl alcohol | Kuraray America Inc. |
| POVAL™ R-3109 | Silane functional polyvinyl alcohol | Kuraray America Inc. |

Table 3. Stock Solutions

| Name | Preparation |
|---|---|
| NPS1 | SILCO™ Li518 diluted to 1% solids in water, acidified to pH 1.5 with 1.5 M nitric acid |
| NPS2 | A 5 wt% solution of [SILCO™ Li518: Polystep B-430S (99:1 w/w)] in water and was acidified with 0.8 M $HNO_3$ to pH of 2. |
| NPS3 | A 2 wt% solutions of SILCO™ Li518 in water |
| LS1 | A 2 wt% solution of LITHISIL™ 25 in water |
| LS2 | A 2 wt% solution of LSS-75 in water |

Coating compositions were prepared as follows, all amounts are expressed in parts w by weight unless otherwise indicated.

Coating Composition 1, a solution of

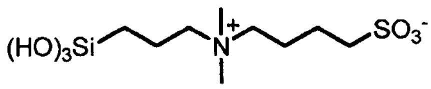

,

a zwitterionic silane, was prepared as follows. 3-(N,N-dimethylaminopropyl)trimethoxysilane (49.7 g, 239 mmol) was added to a screw-top jar followed by deionized ("DI") water (82.2 g) and 1,4-butane sultone (32.6 g, 239 mmol). The reaction mixture was heated to 75°C and mixed for 14 hours. After heating, the reaction mixture was diluted to 2 wt% in water to obtain the final coating solution.

Coating Composition 2 was prepared as a 2 wt% solution of a blend of Coating Composition 1: LS 1: NPS3 (61:19:20 w/w) in water.

Coating Composition 3 was prepared as a 2 wt% solution of a blend of Coating Composition 1: NPS3 (80:20 w/w) in water.

Coating Composition 4 (not within the claims): Preparation of

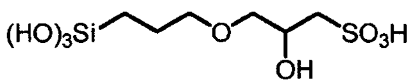

coating solution, hydroxy sulfonate silane, was prepared as described in US Pat. No. 4,338,377 and diluted to 2 wt%.

Coating Composition 5 (phosphonate silane) - not within the claims - was prepared by dilution of 3-(trihydroxysilyl)-propyl methyl-phosphonate, monosodium salt with water to a 2 wt% solution.

Coating Composition 6 (carboxylate silane) - not within the claims - was prepared by dilution of carboxyethylsilanetriol, sodium salt with water to a 2 wt-% solution.

Coating Composition 7 (propane sulfonic acid) - not within the claims - was prepared by dilution of 3-(trihydroxysilyl)-1-propanesulfonic acid with water to a 2 wt% solution.

Coating Composition 8 (sugar silane) - not within the claims - was prepared by dilution of N-(3-triethoxy-silylpropyl)gluconamide with water to a 2 wt% solution.

Coating Composition 9 (ammonium silane) - not within the claims - was prepared by dilution of N-trimethoxysilylpropyl-N,N,N-trimethylammonium chloride with water to a 2 wt% solution.

Coating Composition 10 (polyethylene glycol silane) - not within the claims - was prepared by dilution of 2-[methoxy-(polyethylenoxy) propyl]trimethoxysilane with water to a 2 wt% solution.

Coating Composition 11 - not within the claims - was prepared as a 2 wt% solution of a blend of Coating Composition 4 : LS2 (65:35 w/w) in water.

Coating Composition 12 - not within the claims - was prepared as a 2 wt% solution of a blend of Coating Composition 5 : LS2 (65:35 w/w) in water.

Coating Composition 13 - not within the claims - was prepared as a 2 wt% solution of a blend of Coating Composition 6 : LS2 (65:35 w/w) in water.

Coating Composition 14 - not within the claims - was prepared as a 2 wt% solution of a blend of Coating Composition 7 : LS2 (65:35 w/w) in water.

Coating Composition 15 - not within the claims - was prepared as a 2 wt% solution of a blend compound of Coating Composition 8 : LS2 (65:35 w/w) in water.

Coating Composition 16 - not within the claims - was prepared as a 2 wt% solution of a blend of Coating Composition 9 : LS2 (65:35 w/w) in water.

Coating Composition 17 - not within the claims - was prepared as a 2 wt% solution of a blend of Coating Composition 10 : LS2 (65:35 w/w) in water.

Coating Composition 18 was prepared as a 2 wt% solution of a blend of Coating Composition 1 : LS2 (65:35 w/w) in water.

Coating Composition 19 was prepared as a 2 wt% solution of a blend of Coating Composition 1 : LS2 (65:35 w/w) in water and was acidified with 0.8 M $HNO_3$ to a pH of 5.

Coating Composition 20 - not within the claims - was prepared as a 2 wt% solution of a blend of Coating Composition 8 : LS2 (65:35 w/w) in water and was acidified with 0.8 M $HNO_3$ to a pH of 4.5.

Coating Composition 21 - not within the claims - was prepared as a 2 wt% solution of a blend of Coating Composition 6 : LS2 (65:35 w/w) in water and was acidified with 0.8 M $HNO_3$ to a pH 4.5.

Coating Composition 22 - not within the claims - was prepared as a 2 wt% solution of a blend of Coating Composition 5 : LS2 (65:35 w/w) in water and was acidified with 0.8 M $HNO_3$ to a pH of 3.

Coating Composition 23 - not within the claims - was prepared as a 2 wt% solution of POVAL™ R3109 in water and was acidified with 0.8 M $HNO_3$ to a pH of 3.

Coating Composition 24 - not within the claims - was prepared as a 2 wt% solution of POVAL™ R1130 in water and was acidified with 0.8 M $HNO_3$ to a pH of 3.

Coating Composition 25 - not within the claims - was prepared as a 2 wt% solution of POVAL™ R2105 in water and was acidified with 0.8 M $HNO_3$ to a pH of 3.

Example 1 (not within the claims)

Before coating with the indicated coating composition, porcelain steel sheets were cleaned to remove adsorbed organic matter from the surface, exposing free OH groups. A paste of ALCONOX™ detergent was rubbed on each porcelain sheet with a wet paper towel. Then the sheet was rinsed with water. The sheet was considered clean if water ran off the sheet without beading up.

A clean porcelain steel sheet about 20.3 cm x 25 cm was coated with three coats of solution NPS1 using a KIMWIPE™ paper tissue. The samples were dried at room temperature, and then were heated at 150°C for 15 minutes. The samples were subsequently coated with three coats of Coating Composition 2 using a KIMWIPE™ paper tissue. The samples were dried at room temperature, and then were heated at 150°C for 15 minutes. After cooling the samples to room temperature, they were rinsed with DI water (600 mL/minute) for 60 seconds.

Example 2

For Example 2, a 20.3 cm x 20.3 cm float glass plate was cleaned with a paste of ALCONOX™ detergent so that water ran off the plate without beading up. The clean glass plate was coated with Coating Composition 2 using a KIMWIPE™ paper tissue. The coated glass plate was dried at room temperature in an air stream and then heated for 10 minutes at 150°C. After cooling the sample to room temperature, it was rinsed with DI water (600 mL/minute) for 60 seconds and then dried with a paper towel.

Example 3 (not within the claims)

Before coating, the painted steel sheets were cleaned using ALCONOX™ detergent. Then the sheet was coated with three coats of NPS1 using a KIMWIPE™ paper tissue. The samples were dried at room temperature in an air stream and then were heated at 150°C for 15 minutes. The samples were subsequently coated with three coats of Coating Composition 2 using a KIMWIPE™ paper tissue. The sample was dried at room temperature and then was heated at 150°C for 15 minutes. After cooling, the sample to room temperature, it was rinsed with DI water (600 mL/minute) for 60 seconds and dried with a paper towel.

Example 4 (not within the claims)

The film in this example was a 4 mil PVDC primed clear polyester (PET) film from 3M Company. The PET film was coated with silica nanoparticles by using NPS2 solution and a Meyer rod (#6). The coated film was dried at room temperature before heating for 5 minutes at 120°C. These films were coated with Coating Composition 3 in the same manner as that used for forming silica nanoparticle coatings. The coated films were dried at room temperature before being heated at 120°C for 10 minutes. After cooling the samples to room temperature, they were rinsed with DI water (600 mL/minute) for 60 seconds and dried with a paper towel.

Example 5 (not within the claims)

The base film for this example was 2 mil (0.05 mm) white polyester from with a UV cured acrylic coating obtained from Protect-all, Inc. The dry erase film was flame treated by the method described in example 8 of U.S. Patent No. 5,244,780 (Strobel et al.). After flame treatment, the film was coated with silica nanoparticles in NPS2 solution using a #7 Mayer rod. The coated film was dried at room temperature before being heated for 15 minutes at 120°C. The dried film was then coated with Coating Composition 3 with a #7 Mayer rod. The coated film was dried at room temperature before being heated at 150°C for 15 minutes. After cooling the film to room temperature, it was rinsed with DI water (600 mL/minute) for 60 seconds and then dried with a paper towel.

Comparative Example C1

Porcelain steel panel as received.

Comparative Example C2

Float glass plate as received.

Comparative Example C3

Painted steel panel as received.

Comparative Example C4

Clear polyester film, 2 side primed with PVDC, as received.

Comparative Example C5

White polyester dry erase film as received.

Table 4. Examples 1 to 5 and Comparative Examples C1 to C5

| Example | Base | Permanent Marker % Removed with Water | Permanent Marker % Removed with WINDEX™ | 24 hr Dry Erase Strokes |
|---|---|---|---|---|
| 1 * | Porcelain steel | 100 | 100 | 7 |
| C1 | Porcelain steel | 13 | 72 | 7 |
| 2 | Glass | 100 | 100 | 7 |

(continued)

| Example | Base | Permanent Marker % Removed with Water | Permanent Marker % Removed with WINDEX™ | 24 hr Dry Erase Strokes |
|---|---|---|---|---|
| C2 | Glass | 21 | 87 | 7 |
| 3 * | Painted steel | 98 | 100 | 8 |
| C3 | Painted steel | 0 | 5 | 9 |
| 4 * | PET film | 100 | 100 | 9 |
| C4 | PET film | 0 | 8 | 85 |
| 5 * | Dry erase film | 93 | 95 | 77 |
| C5 | Dry erase film | 0 | 8 | 12 |
| * not within the claims | | | | |

Example 1 was tested for abrasion resistance with two dry erasers, an EXPO™ dry eraser and a 3M™ whiteboard eraser. The erasers were passed over the sample 5000 times as shown in Table 5 with the abrasion tester described in the Test Methods section. After abrasion, each sample was tested for permanent marker removal by water and Windex brand window cleaner.

Table 5. Abrasion test on Example 1.

| Example | Eraser | % Removed with Water | % Removed with WINDEX™ |
|---|---|---|---|
| 1 * | EXPO™ dry eraser | 100 | 100 |
| 1 * | 3M™ whiteboard eraser | 100 | 100 |
| * not within the claims | | | |

Examples 6 to 17

For Examples 6 to 17, a series of 20.3 cm x 20.3 cm float glass plates first cleaned with a paste of ALCONOX™ detergent so that water no longer beaded up on the glass plate. The clean glass plates were each coated with Coating Composition 1 and 4 to 10, respectively, using a KIMWIPE™ paper tissue. The coated glass plates were dried at room temperature and heated for 10 minutes at 150°C. After cooling the samples to room temperature, they were rinsed with DI water (600 mL/minute) for 60 seconds and dried at room temperature before testing.

Table 6. Examples 6 to 17

| Example | Coating Composition | Substrate | Silane | Dewet of markers 24 hr score | Permanent marker removal 24 hr Water | Permanent marker removal 24 hr WINDEX™ | Dry Erase Strokes 24 hr EXPO™ eraser |
|---|---|---|---|---|---|---|---|
| * 6 | 4 | Glass | Hydroxy sulfonate | 0 | 70 | 96 | 7 |
| 7 * | 5 | Glass | Phosphonate | 0 | 92 | 100 | 7 |
| 8 * | 6 | Glass | Carboxylate | 0 | 100 | 100 | 7 |
| 9 * | 8 | Glass | Gluconamide | 0 | 77 | 100 | 7 |
| 10 | 1 | Glass | Zwitterion | 0 | 100 | 100 | 7 |

(continued)

| Example | Coating Composition | Substrate | Silane | Dewet of markers 24 hr score | Permanent marker removal 24 hr Water | Permanent marker removal 24 hr WINDEX™ | Dry Erase Strokes 24 hr EXPO™ eraser |
|---|---|---|---|---|---|---|---|
| 11 * | 11 | Glass | Hydroxy sulfonate | 0 | 100 | 100 | 7 |
| 12 * | 12 | Glass | Phosphonate | 0 | 100 | 100 | 7 |
| 13 * | 13 | Glass | Carboxylate | 0 | 100 | 100 | 7 |
| 14 * | 14 | Glass | Sulfonate | 0 | 100 | 100 | 7 |
| 15 * | 15 | Glass | Gluconamide | 0 | 100 | 100 | 7 |
| 16 * | 18 | Glass | Zwitterion | 0 | 100 | 100 | 7 |
| * not within the claims | | | | | | | |

Comparative Examples C6 to C11

A series of 20.3 cm x 20.3 cm float glass plates were first cleaned with a paste of ALCONOX™ detergent. The plates were rinsed with water and dried in an air stream. After cleaning and drying, they were coated with Coating Compositions 7, 9, 10, 16, and 17, respectively, using a KIMWIPE™ paper tissue. The coated glass plates were dried at room temperature and then heated for 10 minutes at 150°C. After cooling the samples to room temperature, they were rinsed with DI water (600 mL/minute) for 60 seconds and dried before marker testing. Results are indicated in Table 7.

Table 7. Comparative Examples C6 to C11

| Example | Coating Composition | Substrate | Surface | Dewet of markers 24 hr score | Permanent marker removal 24 hr Water | Permanent marker removal 24 hr WINDEX™ | Dry Erase Strokes 24 hr EXPO™ eraser |
|---|---|---|---|---|---|---|---|
| C6 | None | Glass | Cleaned | 0 | 67 | 83 | 7 |
| C7 | 7 | Glass | Sulfonate silane | 0 | 58 | 85 | 7 |
| C8 | 9 | Glass | Quaternary ammonium silane | 0 | 52 | 57 | 7 |
| C9 | 10 | Glass | Polyethylene oxide silane | 0 | 35 | 83 | 7 |
| C10 | 16 | Glass | Quaternary ammonium silane | 0 | 70 | 70 | 7 |
| C11 | 17 | Glass | Polyethylene oxide silane | 0 | 60 | 84 | 7 |

Examples 17 to 22

A series of 20 cm x 25 cm porcelain steel panels were first cleaned with a paste of ALCONOX™ detergent. The plates were rinsed with water and dried in an air stream. After cleaning and drying, they were coated with coating compositions as indicated in Table 7 and using a KIMWIPE™ paper tissue. The coated porcelain plates were dried at room temperature and then heated for 10 minutes at 150°C. After cooling the samples to room temperature, they were rinsed with DI water (600 mL/minute) for 60 seconds and dried before marker testing.

Table 8. Examples 17 to 22

| Example | Coating Composition | Substrate | Silane | Dewet of markers 24 hr score | Permanent marker removal 24 hr Water | Permanent marker removal 24 hr WINDEX™ | Dry Erase Strokes 24 hr EXPO™ eraser |
|---|---|---|---|---|---|---|---|
| 17 | 18 | Porcelain | Zwitterion | 0 | 100 | 100 | 7 |
| 18 * | 11 | Porcelain | Sulfonate | 0 | 100 | 100 | 7 |
| 19 * | 15 | Porcelain | Sugar silane | 0 | 100 | 100 | 7 |
| 20 * | 13 | Porcelain | Carboxylate | 0 | 100 | 100 | 8 |
| 21 * | 12 | Porcelain | Phosphonate | 0 | 100 | 100 | 7 |
| 22 * | 25 | Porcelain | PVA silane | 0 | 98 | 100 | 12 |
| * not within the claims | | | | | | | |

Examples 17 to 22 were tested for abrasion resistance to a dry eraser. The EXPO™ dry eraser was passed over each sample 1000 times with the abrasion tester described in the Test Methods section. After abrasion, each sample was tested for permanent marker removal by water and Windex.

Table 9. Abrasion results for Examples 17 to 22.

| Example | Percent removed with water | Percent removed with WINDEX™ |
|---|---|---|
| 17 | 100 | 100 |
| 18 * | 100 | 100 |
| 19 * | 100 | 100 |
| 20 * | 90 | 100 |
| 21 * | 91 | 100 |
| 22 * | 100 | 100 |
| * not within the claims | | |

Examples 17 to 22 were tested for the effects of repeated writing and erasing in the same place. The black SHARPIE™, AVERY™, and BIC™ markers were written on each example. After the writing was dry, the sample was sprayed with WINDEX™ brand window cleaner and wiped clean with a paper towel. The writing and cleaning was performed 100 times on each example. Then the permanent marker removal test was done on each example.

Table 10. Write and erase results for Examples 17 to 22.

| Example | Percent removed with water | Percent removed with WINDEX™ |
|---|---|---|
| 17 | 100 | 100 |
| 18 * | 100 | 100 |
| 19 * | 83 | 100 |
| 20 * | 83 | 98 |
| 21 * | 100 | 100 |
| 22 * | 100 | 100 |
| * not within the claims | | |

Examples 23 to 30

The film in this example was a 4 mil PVDC primed clear polyester (PET) film from 3M Company. The PET film

was coated with silica nanoparticles by using NPS2 solution and a Meyer rod (#6). The coated film was dried at room temperature before heating for 5 minutes at 120°C. These films were coated with Coating Composition 3 in the same manner as that used for forming silica nanoparticle coatings. The coated films were dried at room temperature before being heated at 120°C for 10 minutes. After cooling the samples to room temperature, they were rinsed with DI water (600 mL/minute) for 60 seconds and dried with a paper towel.

Table 11. Examples 23 to 30.

| Example | Coating Composition | Substrate | Silane | Dewet of markers 24 hr score | Permanent marker removal 24 hr Water | Permanent marker removal 24 hr WINDEX™ | Dry Erase Strokes 24 hr EXPO™ eraser |
|---|---|---|---|---|---|---|---|
| 23 | 19 | Primed PET | Zwitterion | 0 | 70 | 99 | 13 |
| 24 * | 11 | Primed PET | Sulfonate | 0 | 65 | 100 | 9 |
| 25 * | 20 | Primed PET | Sugar silane | 0 | 23 | 98 | 10 |
| 26 * | 21 | Primed PET | Carboxylate | 0 | 2 | 98 | 10 |
| 27 * | 22 | Primed PET | Phosphonate | 0 | 73 | 100 | 8 |
| 28 * | 23 | Primed PET | Polyvinyl alcohol | 0 | 50 | 98 | 11 |
| 29 * | 24 | Primed PET | Polyvinyl alcohol | 0 | 44 | 99 | 16 |
| 30 * | 25 | Primed PET | Polyvinyl alcohol | 0 | 59 | 97 | 15 |
| * not within the claims | | | | | | | |

Example 31 (not within the claims)

An aqueous solution of polyvinyl alcohol (98 mole% hydrolyzed, weight average molecular weight ("WAMW") of about 31,000 to 50,000) was prepared by dissolving 3 g of the PVA in 97 g D.I water and stirring at 60°C overnight. The solution was subsequently acidified with concentrated $HNO_3$ to a pH of 3. Polyester film was primed with silica nanoparticles according to the procedure in Examples 23 to 30. The acidified solution of PVA was coated on the silica nanoparticle primed polyester from with a #6 Mayer bar. The coated film was cured at 120 C for 5 to 10 minutes.

Example 32 (not within the claims)

An aqueous solution of polyvinyl alcohol (98 mole% hydrolyzed, WAMW of about 31,000 to 50,000) was prepared by dissolving 3 g of the PVA in 97 g DI water and stirring at 60°C overnight. The solution was subsequently acidified with concentrated $HNO_3$ to a pH of 3. The acidified solution of PVA was coated on polyester film having no silica nanoparticle primer with a #6 Mayer bar. The coated film was cured at 120°C for 5 to 10 minutes.

Table 12. Examples 31 and 32

| Example | Coating Composition | Substrate | Solution | Dewet of markers 24 hr score | Permanent marker removal Water | Permanent marker removal 24 hr WINDEX™ |
|---|---|---|---|---|---|---|
| 23 | 19 | Primed PET | Acidified PVA | 0 | 57 | 100 |

(continued)

| Example | Coating Composition | Substrate | Solution | Dewet of markers 24 hr score | Permanent marker removal Water | Permanent marker removal 24 hr WINDEX™ |
|---|---|---|---|---|---|---|
| 24 | 11 | Unprimed PET | Acidified PVA | 0 | 33 | 98 |

## Claims

**1.** A hydrophilic coating composition, comprising one or more hydrophilic zwitterionic silanes, wherein the zwitterionic silanes are selected from

(a) the group consisting of:

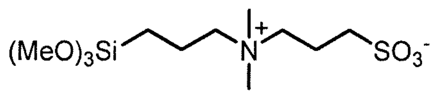

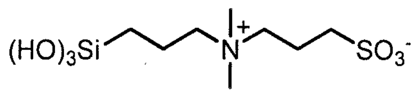

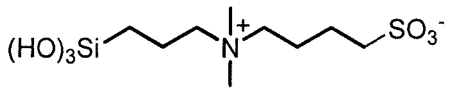

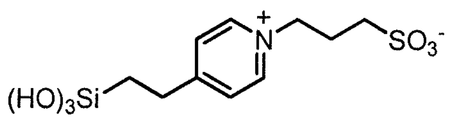

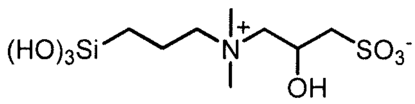

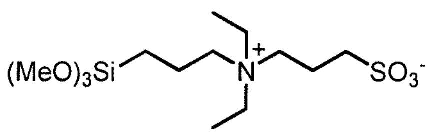

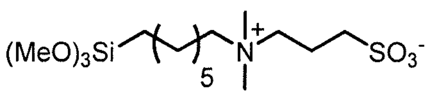

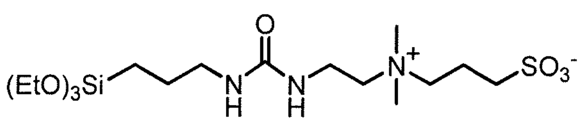

and

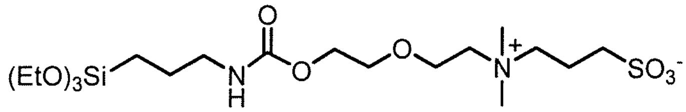

(b) silanes having the Formula (II):

$$(R^1O)_p\text{-}Si(R^2)_q\text{-}W\text{-}N^+(R^3)(R^4)\text{-}(CH_2)_m\text{-}SO_3^- \qquad (II)$$

wherein:

each $R^1$ is independently a hydrogen, methyl group, or ethyl group;
each $R^2$ is independently a methyl group or an ethyl group;
each $R^3$ and $R^4$ is independently a saturated or unsaturated, straight chain, branched, or cyclic organic group, which may be joined together, optionally with atoms of the group W, to form a ring;
W is an organic linking group;
m is an integer of 1 to 4;
p is an integer of 1 to 3;
q is 0 or 1; and

$$p + q = 3,$$

and
(c) silanes having the Formula (III):

$$(R^1O)_p\text{-}Si(R^2)_q\text{-}CH_2CH_2CH_2\text{-}N^+(CH_3)_2\text{-}(CH_2)_m\text{-}SO_3^- \qquad (III)$$

wherein:

each $R^1$ is independently a hydrogen, methyl group, or ethyl group;
each $R^2$ is independently a methyl group or an ethyl group;
p and m are integers of 1 to 3;
q is 0 or 1; and

$$p + q = 3.$$

**2.** The hydrophilic coating composition of claim 1, further comprising tetraalkoxysilane or oligomers thereof, lithium silicate, sodium silicate, potassium silicate, or combinations thereof.

**3.** The hydrophilic coating composition of claim 1 or 2, wherein the hydrophilic coating further comprises nanosilica particles having particle sizes less than 100 nm.

**4.** The hydrophilic coating composition of any of claims 1 to 3, wherein the zwitterionic silane is selected from the group consisting of:

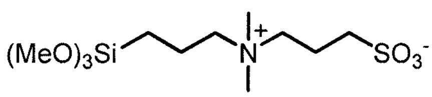

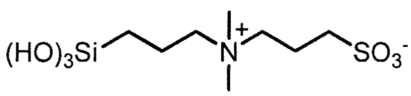

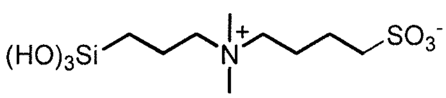

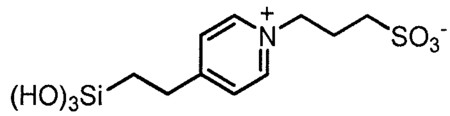

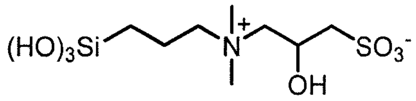

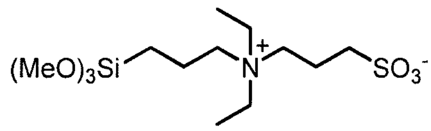

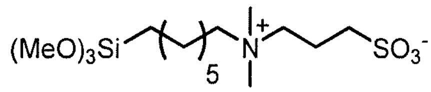

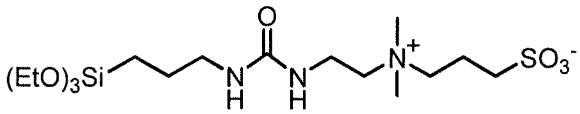

and

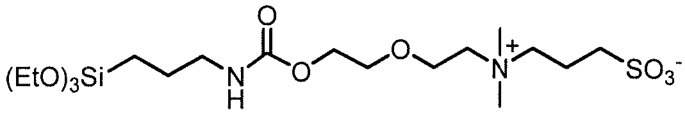

.

5. The hydrophilic coating composition of any of claims 1 to 3, wherein the zwitterionic silane has the Formula (II):

$$(R^1O)_p\text{-}Si(R^2)_q\text{-}W\text{-}N^+(R^3)(R^4)\text{-}(CH_2)_m\text{-}SO_3^- \qquad \text{(II)}$$

wherein:

each $R^1$ is independently a hydrogen, methyl group, or ethyl group;
each $R^2$ is independently a methyl group or an ethyl group;
each $R^3$ and $R^4$ is independently a saturated or unsaturated, straight chain, branched, or cyclic organic group, which may be joined together, optionally with atoms of the group W, to form a ring;
W is an organic linking group;
m is an integer of 1 to 4;
p is an integer of 1 to 3;
q is 0 or 1; and

$$p + q = 3.$$

6. The hydrophilic coating composition of claim 5, wherein the organic linking group W is selected from saturated or unsaturated, straight chain, branched, or cyclic organic groups.

7. The hydrophilic coating composition of any of claims 1 to 3, wherein the zwitterionic silane has the Formula (III):

$$(R^1O)_p\text{-}Si(R^2)_q\text{-}CH_2CH_2CH_2\text{-}N^+(CH_3)_2\text{-}(CH_2)_m\text{-}SO_3^- \qquad \text{(III)}$$

wherein:

each $R^1$ is independently a hydrogen, methyl group, or ethyl group;
each $R^2$ is independently a methyl group or an ethyl group;
p and m are integers of 1 to 3;
q is 0 or 1; and

$$p + q = 3.$$

**8.** The hydrophilic coating composition of any of claims 1 to 7, wherein the hydrophilic coating composition is on a surface of an article including a substrate and wherein the surface is hydrophobic.

**9.** The hydrophilic coating composition of claim 8, wherein the surface is selected from the group consisting of glass, porcelain, metal, and polymeric material.

**10.** The hydrophilic coating composition of claim 8 or 9, further comprising an $^{-}OH$ functional primer coating between the surface of the article and the hydrophilic coating.

**11.** The hydrophilic coating composition of claim 10, wherein the primer coating is selected from the group consisting of tetraalkoxysilanes, oligomers thereof, lithium silicates, sodium silicates, and potassium silicates.

**12.** The hydrophilic coating composition of claim 10, wherein the primer coating comprises vapor deposited SiO, vapor deposited or $SiO_2$, or one or more vapor deposited alkoxysilanes.

**13.** The hydrophilic coating composition of any of claims 8 to 12, further comprising
an adhesive on a surface of the article opposing the surface having a hydrophilic coating thereon.

**14.** A method of using an article as a rewritable writing surface, comprising

(a) providing an article having a surface on which the hydrophilic coating composition of any of claims 1 to 7 has been coated;
(b) writing an initial legend with a writing instrument on the surface of the article having the hydrophilic coating thereon, and then
(c) removing the initial legend, wherein removing the initial legend preferably comprises one or more of:

(1) wiping the surface with the initial legend thereon, and
(2) treating the surface with the initial legend with a liquid cleaning agent selected from the group consisting of water and organic solvents;

and optionally
(d) writing with a writing instrument on the face having a hydrophilic coating thereon after removing the initial legend.

**15.** The method of claim 14, wherein the writing instrument is selected from the group consisting of pencils, pens, and felt tip markers.

**Patentansprüche**

**1.** Eine hydrophile Beschichtungszusammensetzung, umfassend ein oder mehrere hydrophile zwitterionische Silane, wobei die zwitterionischen Silane ausgewählt sind aus

(a) der Gruppe, bestehend aus:

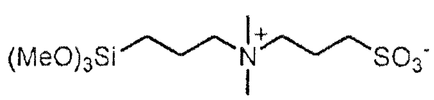

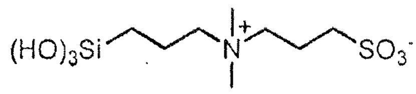

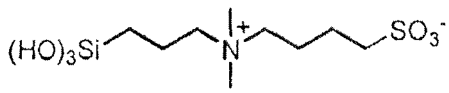

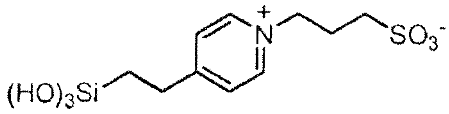

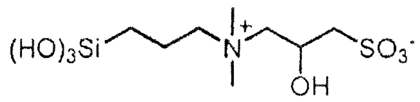

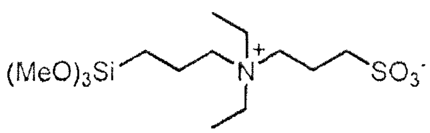

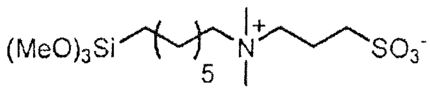

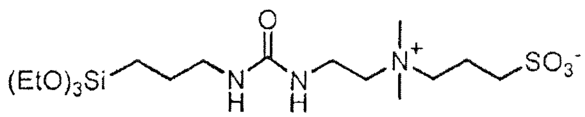

und

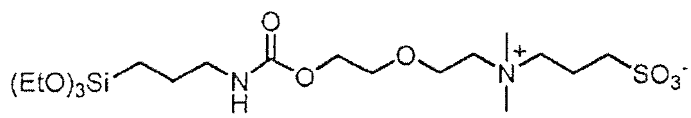

(b) Silanen der Formel (II):

$$(R^1O)p\text{-}Si(R^2)q\text{-}W\text{-}N^+(R^3)(R^4)\text{-}(CH_2)_m\text{-}SO_3^- \qquad \text{(II)}$$

wobei:

jedes $R^1$ unabhängig ein Wasserstoff, eine Methylgruppe oder eine Ethylgruppe ist;
jedes $R^2$ unabhängig eine Methylgruppe oder eine Ethylgruppe ist;
jedes $R^3$ und $R^4$ unabhängig eine gesättigte oder ungesättigte, geradkettige, verzweigte oder cyclische organische Gruppe ist, die miteinander, wahlweise mit Atomen der Gruppe W, verbunden werden können, um einen Ring zu bilden;
W eine organische Verknüpfungsgruppe ist;
m eine ganze Zahl von 1 bis 4 ist;
p eine ganze Zahl von 1 bis 3 ist;
q gleich 0 oder 1 ist; und

$$p + q = 3,$$

und

(c) Silanen der Formel (III):

$$(R^1O)p\text{-}Si(R^2)q\text{-}CH_2CH_2CH_2\text{-}N^+(CH_3)_2\text{-}(CH_2)_m\text{-}SO_3^- \qquad \text{(III)}$$

wobei:

jedes $R^1$ unabhängig ein Wasserstoff, eine Methylgruppe oder eine Ethylgruppe ist;
jedes $R^2$ unabhängig eine Methylgruppe oder eine Ethylgruppe ist;
p und m ganze Zahlen von 1 bis 3 sind;
q gleich 0 oder 1 ist; und

$$p + q = 3.$$

2. Die hydrophile Beschichtungszusammensetzung nach Anspruch 1, ferner umfassend Tetraalkoxysilan oder Oligomere davon, Lithiumsilikat, Natriumsilikat, Kaliumsilikat oder Kombinationen davon.

3. Die hydrophile Beschichtungszusammensetzung nach Anspruch 1 oder 2, wobei die hydrophile Beschichtungszusammensetzung ferner Nanosilicateilchen mit Teilchengrößen von weniger als 100 nm umfasst.

4. Die hydrophile Beschichtungszusammensetzung nach einem der Ansprüche 1 bis 3, wobei das zwitterionische Silan ausgewählt ist aus der Gruppe, bestehend aus:

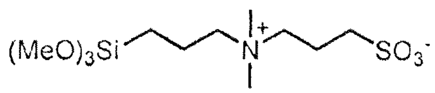

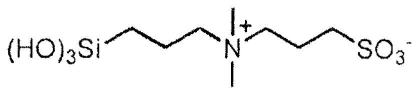

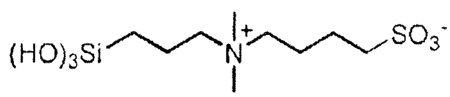

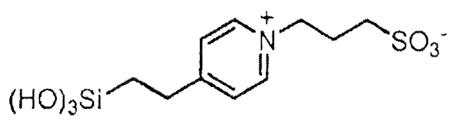

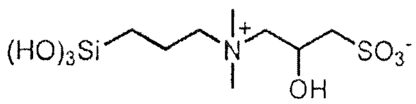

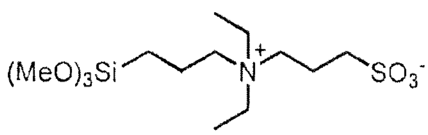

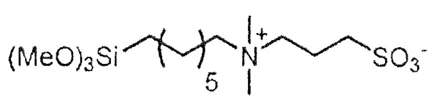

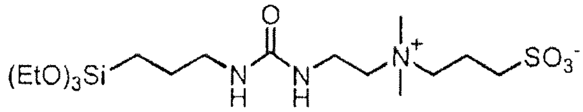

und

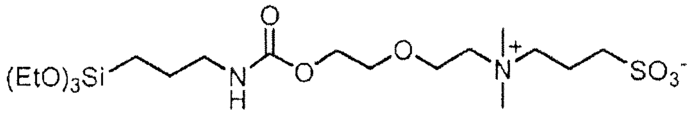

.

5. Die hydrophile Beschichtungszusammensetzung nach einem der Ansprüche 1 bis 3, wobei das zwitterionische Silan die Formel (II) aufweist:

$$(R^1O)p\text{-}Si(R^2)_q\text{-}W\text{-}N^+(R^3)(R^4)\text{-}(CH_2)_m\text{-}SO_3^- \qquad \text{(II)}$$

wobei:

jedes $R^1$ unabhängig ein Wasserstoff, eine Methylgruppe oder eine Ethylgruppe ist;
jedes $R^2$ unabhängig eine Methylgruppe oder eine Ethylgruppe ist;
jedes $R^3$ und $R^4$ unabhängig eine gesättigte oder ungesättigte, geradkettige, verzweigte oder cyclische organische Gruppe ist, die miteinander, wahlweise mit Atomen der Gruppe W, verbunden werden können, um einen Ring zu bilden;
W eine organische Verknüpfungsgruppe ist;
m eine ganze Zahl von 1 bis 4 ist;
p eine ganze Zahl von 1 bis 3 ist;
q gleich 0 oder 1 ist; und

$$p + q = 3.$$

6. Die hydrophile Beschichtungszusammensetzung nach Anspruch 5, wobei die organische Verknüpfungsgruppe W ausgewählt ist aus gesättigten oder ungesättigten, geradkettigen, verzweigten, oder cyclischen organischen Gruppen.

7. Die hydrophile Beschichtungszusammensetzung nach einem der Ansprüche 1 bis 3, wobei das zwitterionische Silan die Formel (III) aufweist:

$$(R^1O)_p\text{-}Si(R^2)_q\text{-}CH_2CH_2CH_2\text{-}N^+(CH_3)_2\text{-}(CH_2)_m\text{-}SO_3^- \qquad \text{(III)}$$

wobei:

jedes $R^1$ unabhängig ein Wasserstoff, eine Methylgruppe oder eine Ethylgruppe ist;
jedes $R^2$ unabhängig eine Methylgruppe oder eine Ethylgruppe ist;
p und m ganze Zahlen von 1 bis 3 sind;
q gleich 0 oder 1 ist; und

$$p + q = 3.$$

8. Die hydrophile Beschichtungszusammensetzung nach einem der Ansprüche 1 bis 7, wobei die hydrophile Beschichtungszusammensetzung auf einer Oberfläche eines Gegenstandes, einschließlich eines Substrats, vorliegt und wobei die Oberfläche hydrophob ist.

9. Die hydrophile Beschichtungszusammensetzung nach Anspruch 8, wobei die Oberfläche ausgewählt ist aus der Gruppe, bestehend aus Glas, Porzellan, Metall und Polymermaterial.

**10.** Die hydrophile Beschichtungszusammensetzung nach Anspruch 8 oder 9, ferner umfassend eine $^{-}$OH-funktionelle Grundierungsbeschichtung zwischen der Oberfläche des Gegenstandes und der hydrophilen Beschichtung.

**11.** Die hydrophile Beschichtungszusammensetzung nach Anspruch 10, wobei die Grundierungsbeschichtung ausgewählt ist aus der Gruppe, bestehend aus Tetraalkoxysilanen, Oligomeren davon, Lithiumsilikaten, Natriumsilikaten und Kaliumsilikaten.

**12.** Die hydrophile Beschichtungszusammensetzung nach Anspruch 10, wobei die Grundierungsbeschichtung aufgedampftes SiO, aufgedampftes $SiO_2$ oder ein oder mehrere aufgedampfte Alkoxysilane umfasst.

**13.** Die hydrophile Beschichtungszusammensetzung nach einem der Ansprüche 8 bis 12, ferner umfassend einen Klebstoff auf einer Oberfläche des Gegenstandes, die der Oberfläche gegenüberliegt, die eine hydrophile Beschichtung darauf aufweist.

**14.** Ein Verfahren zum Verwenden eines Gegenstandes als eine wiederbeschreibbare Schreiboberfläche, umfassend

(a) Bereitstellen eines Gegenstandes mit einer Oberfläche, auf der die hydrophile Beschichtungszusammensetzung nach einem der Ansprüche 1 bis 7 aufgebracht wurde;
(b) Schreiben einer anfänglichen Beschriftung mit einem Schreibgerät auf die Oberfläche des Gegenstandes, der die hydrophile Beschichtung darauf aufweist, und dann
(c) Entfernen der anfänglichen Beschriftung, wobei das Entfernen der anfänglichen Beschriftung vorzugsweise eines oder mehrere umfasst von:

(1) Abwischen der Oberfläche mit der anfänglichen Beschriftung darauf, und
(2) Behandeln der Oberfläche mit der anfänglichen Beschriftung mit einem flüssigen Reinigungsmittel, ausgewählt aus der Gruppe, bestehend aus Wasser und organischen Lösungsmitteln;

und gegebenenfalls
(d) Schreiben mit einem Schreibgerät auf der Fläche, die eine hydrophile Beschichtung darauf aufweist, nach dem Entfernen der anfänglichen Beschriftung.

**15.** Das Verfahren nach Anspruch 14, wobei das Schreibgerät ausgewählt ist aus der Gruppe, bestehend aus Stiften, Schreibern und Filzstiften.

## Revendications

**1.** Composition de revêtement hydrophile, comprenant un ou plusieurs silanes zwittérioniques hydrophiles, dans laquelle les silanes zwittérioniques sont choisis parmi

(a) le groupe constitué de :

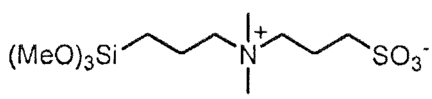

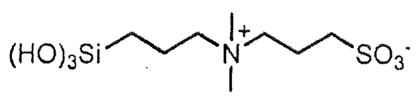

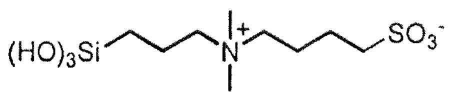

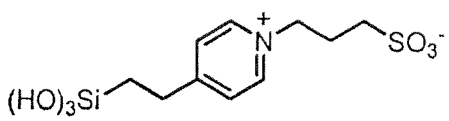

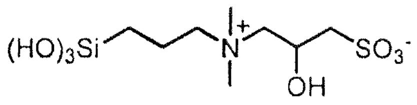

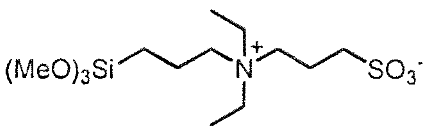

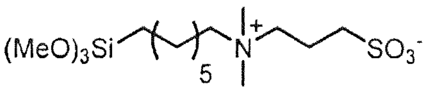

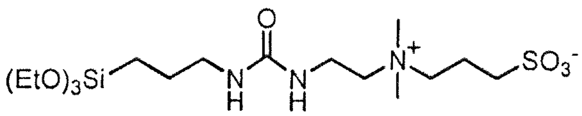

et

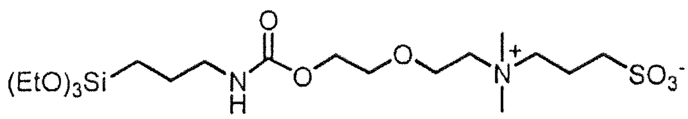

(b) silanes de formule (II) :

$$(R^1O)_p\text{-}Si(R^2)_q\text{-}W\text{-}N^+(R^3)(R^4)\text{-}(CH_2)_m\text{-}SO_3^- \qquad (II)$$

dans laquelle :

chaque $R^1$ est indépendamment un hydrogène, un groupe méthyle ou un groupe éthyle ;
chaque $R^2$ est indépendamment un groupe méthyle ou un groupe éthyle ;
chaque $R^3$ et $R^4$ est indépendamment un groupe organique saturé ou insaturé, à chaîne linéaire, ramifié ou cyclique, qui peut être joint l'un à l'autre, éventuellement avec des atomes du groupe W, pour former un cycle ;
W est un groupe de liaison organique ;
m est un nombre entier de 1 à 4 ;
p est un nombre entier de 1 à 3 ;
q est 0 ou 1 ; et

$$p + q = 3,$$

et

(c) silanes de formule (III) :

$$(R^1O)_p\text{-}Si(R^2)_q\text{-}CH_2CH_2CH_2\text{-}N^+(CH_3)_2\text{-}(CH_2)_m\text{-}SO_3^- \qquad (III)$$

dans laquelle :

chaque $R^1$ est indépendamment un hydrogène, un groupe méthyle ou un groupe éthyle ;
chaque $R^2$ est indépendamment un groupe méthyle ou un groupe éthyle ;
p et m sont des nombres entiers de 1 à 3 ;
q est 0 ou 1 ; et

$$p + q = 3.$$

2. Composition de revêtement hydrophile selon la revendication 1, comprenant en outre un tétraalcoxysilane ou ses oligomères, du silicate de lithium, du silicate de sodium, du silicate de potassium, ou leurs combinaisons.

3. Composition de revêtement hydrophile selon la revendication 1 ou 2, dans laquelle le revêtement hydrophile comprend en outre des particules de nanosilice ayant des tailles de particules inférieures à 100 nm.

4. Composition de revêtement hydrophile selon l'une quelconque des revendications 1 à 3, dans laquelle le silane zwittérionique est choisi dans le groupe constitué de :

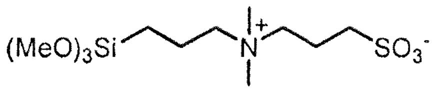

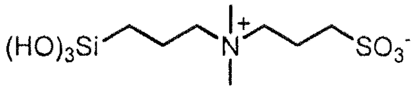

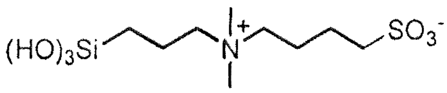

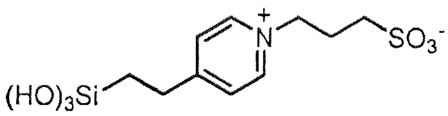

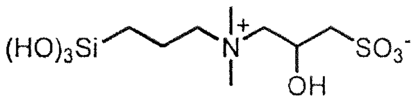

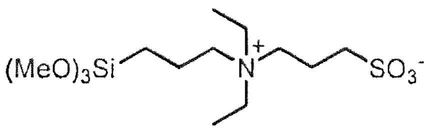

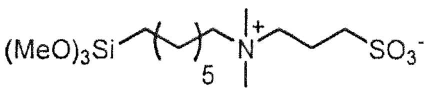

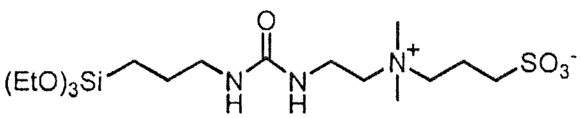

et

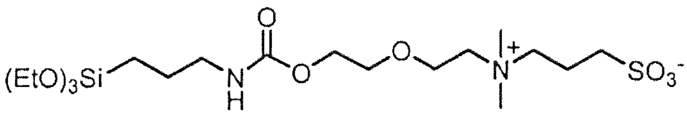

.

5. Composition de revêtement hydrophile selon l'une quelconque des revendications 1 à 3, dans laquelle le silane zwittérionique répond à la formule (II) :

$$(R^1O)_p\text{-}Si(R^2)_q\text{-}W\text{-}N^+(R^3)(R^4)\text{-}(CH_2)_m\text{-}SO_3^- \quad (II)$$

dans laquelle :

chaque $R^1$ est indépendamment un hydrogène, un groupe méthyle ou un groupe éthyle ;
chaque $R^2$ est indépendamment un groupe méthyle ou un groupe éthyle ;
chaque $R^3$ et $R^4$ est indépendamment un groupe organique saturé ou insaturé, à chaîne linéaire, ramifié ou cyclique, qui peut être joint l'un à l'autre, éventuellement avec des atomes du groupe W, pour former un cycle ;
W est un groupe de liaison organique ;
m est un nombre entier de 1 à 4 ;
p est un nombre entier de 1 à 3 ;
q est 0 ou 1 ; et

$$p + q = 3.$$

6. Composition de revêtement hydrophile selon la revendication 5, dans laquelle le groupe de liaison organique W est choisi parmi les groupes organiques saturés ou insaturés, à chaîne linéaire, ramifiés ou cycliques.

7. Composition de revêtement hydrophile selon l'une quelconque des revendications 1 à 3, dans laquelle le silane zwittérionique répond à la formule (III) :

$$(R^1O)_p\text{-}Si(R^2)_q\text{-}CH_2CH_2CH_2\text{-}N^+(CH_3)_2\text{-}(CH_2)_m\text{-}SO_3^- \quad (III)$$

dans laquelle :

chaque $R^1$ est indépendamment un hydrogène, un groupe méthyle ou un groupe éthyle ;
chaque $R^2$ est indépendamment un groupe méthyle ou un groupe éthyle ;
p et m sont des nombres entiers de 1 à 3 ;
q est 0 ou 1 ; et

$$p + q = 3.$$

8. Composition de revêtement hydrophile selon l'une quelconque des revendications 1 à 7, dans laquelle la composition de revêtement hydrophile est sur une surface d'un article incluant un substrat et dans laquelle la surface est hydrophobe.

9. Composition de revêtement hydrophile selon la revendication 8, dans laquelle la surface est choisie dans le groupe constitué par le verre, la porcelaine, le métal et un matériau polymère.

10. Composition de revêtement hydrophile selon la revendication 8 ou 9, comprenant en outre un revêtement d'apprêt à fonction $^-OH$ entre la surface de l'article et le revêtement hydrophile.

11. Composition de revêtement hydrophile selon la revendication 10, dans laquelle le revêtement d'apprêt est choisi dans le groupe constitué par les tétraalcoxysilanes, les oligomères de ceux-ci, les silicates de lithium, les silicates de sodium et les silicates de potassium.

12. Composition de revêtement hydrophile selon la revendication 10, dans lequel le revêtement d'apprêt comprend du SiO déposé en phase vapeur, du $SiO_2$ déposé en phase vapeur, ou un ou plusieurs alcoxysilanes déposés en phase vapeur.

13. Composition de revêtement hydrophile selon l'une quelconque des revendications 8 à 12, comprenant en outre : un adhésif sur une surface de l'article opposée à la surface ayant un revêtement hydrophile sur celle-ci.

14. Procédé d'utilisation d'un article en tant que surface d'écriture réinscriptible, comprenant

(a) la fourniture d'un article ayant une surface sur laquelle la composition de revêtement hydrophile selon l'une quelconque des revendications 1 à 7 a été appliquée ;
(b) l'écriture d'une légende initiale avec un instrument d'écriture sur la surface de l'article ayant le revêtement hydrophile sur celui-ci, puis
(c) l'élimination de la légende initiale, dans lequel l'élimination de la légende initiale comprend de préférence un ou plusieurs parmi :

(1) l'essuyage de la surface avec la légende initiale sur celle-ci, et
(2) le traitement de la surface avec la légende initiale avec un agent de nettoyage liquide choisi dans le groupe constitué par l'eau et les solvants organiques ;

et éventuellement
(d) l'écriture avec un instrument d'écriture sur la face présentant un revêtement hydrophile sur celle-ci après élimination de la légende initiale.

**15.** Procédé selon la revendication 14, dans lequel l'instrument d'écriture est choisi dans le groupe constitué par les crayons, les stylos et les marqueurs de pointe de feutre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102005051587 A1
- US 20090202816 A1
- US 20090148603 A1
- US 4152165 A, Langager
- US 4338377 A, Beck
- US 5936703 A, Miyazaki
- WO 2007146680 A
- WO 2009119690 A
- US 6040053 A, Scholz
- US 5244780 A, Strobel